# EUROPEAN PATENT APPLICATION

(11) **EP 4 325 956 A1**
(43) Date of publication of application: **21.02.2024**
(21) Application number: 22794980.7
(22) Date of filing: 28.04.2022
(51) Int. Cl.: H04W 68/02, H04W 76/27

(54) **COMMUNICATION METHOD AND APPARATUS**

(30) Priority: 30.04.2021 CN 202110485618
(71) Applicant: Huawei Technologies Co., Ltd., Longgang Shenzhen, Guangdong 518129 (CN)
(72) Inventor: LUO, Zhihu, Shenzhen, Guangdong 518129 (CN); JIN, Zhe, Shenzhen, Guangdong 518129 (CN)
(74) Representative: Huawei European IPR
(86) International application number: PCT/CN2022/089851
(87) International publication number: WO 2022/228510

(57) **Abstract**

This application relates to a communication method and apparatus. A terminal device obtains time information, where the time information is for determining a first time period and a second time period; receives a first signal from a first network device in the first time period, where the first signal is for paging or waking up the terminal device; and receives second information from the first network device in the second time period, where the second signal is for paging the terminal device, or indicates to the terminal device whether to receive paging, where a signal format of the first signal and a signal format of the second signal are different, and the signal format includes at least one of the following: coding, modulation, and multiple access. In a possible embodiment of this application, the terminal device determines, by negotiating with a second network device, the first time period and the second time period for communicating with the first network device, to specify the signal formats for receiving the downlink signals from the first network device in the two time periods. This helps improve reliability of receiving the downlink signals by the terminal device, thereby improving communication performance.

## Description

This application claims priority to Chinese Patent Application No. 202110485618.1, filed with the China National Intellectual Property Administration on April 30, 2021 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

Internet of things is oriented to machine type communication (machine type communication, MTC), and is an important network in a future communications field. Main application of internet of things communication includes smart meter reading, medical detection and monitoring, logistics detection, industrial detection and monitoring, an internet of vehicles, wearable-device communication, and the like. Internet of things is applied to diversified scenarios, including indoor, outdoor, overground, and underground scenarios. Therefore, the following special requirements are imposed on a design of internet of things.

Deep coverage: Most internet of things terminals are located in an environment with extremely poor coverage. For example, an electric meter or a water meter is usually installed indoors or even in a place with a quite poor wireless network signal, for example, a basement. Therefore, some coverage enhancement technologies are needed to resolve a poor-coverage problem.

Low power consumption: Most communication devices are powered by using batteries, and are required to have a service life of at least 10 years without battery replacement. Therefore, a requirement on power consumption of the communication devices is high. If the power consumption of the communication devices is high, the service life of the communication devices is affected.

Huge quantity of terminals: A quantity of internet of things terminal devices is much greater than a quantity of devices for human-to-human communication.

Low service rate requirement and insensitive latency: A data packet transmitted by an internet of things device is usually small, and is insensitive to latency.

However, communication performance needs to be improved in communication between a terminal device in the foregoing internet of things scenarios and a network device.

### SUMMARY

Embodiments of this application provide a communication method and apparatus, to improve performance of a communication system.

According to a first aspect, a communication method is provided, and is applied to a terminal device or may be applied to a chip inside the terminal device. In the method, the terminal device obtains time information, where the time information is for determining a first time period and a second time period; receives a first signal from a first network device in the first time period, where the first signal is for paging or waking up the terminal device; and receives a second signal from the first network device in the second time period, where the second signal is for paging the terminal device, or indicates to the terminal device whether to receive paging, where a signal format of the first signal and a signal format of the second signal are different, and the signal format includes at least one of the following: coding, modulation, and multiple access.

In this way, the terminal device may obtain the time information for determining the first time period and the second time period, so that the network device and the terminal device have consistent understandings, to specify the two time periods and the signal formats for receiving the downlink signals from the first network device in the two time periods. This helps improve reliability of receiving the downlink signals by the terminal device, thereby improving communication performance. In addition, different signal formats are used in different time periods, so that implementation is more flexible. The different signal formats may correspond to different requirements. For example, the signal format corresponding to the first signal corresponds to a low-power-consumption requirement. A coding, modulation, or multiple access scheme with lower complexity may be used for the first signal, to reduce a processing capability requirement of the terminal device, thereby reducing power consumption. However, receiving performance of the first signal may be average. The signal format corresponding to the second signal corresponds to a wide-coverage requirement. A coding, modulation, or multiple access scheme with higher complexity than that of the coding, modulation, or multiple access scheme used for the first signal may be used for the second signal. Receiving performance of the second signal can be better ensured, and the wide-coverage requirement can be satisfied. However, power consumption is slightly higher than that of the first signal. In addition, it is specified that the different signal formats are used in the different time periods, so that different requirements, for example, the low-power-consumption requirement and the wide-coverage requirement, can be ensured.

In a possible implementation, the receiving a first signal from a first network device in the first time period, where the first signal is for waking up the terminal device includes: receiving the first signal from the first network device in the first time period, where the first signal indicates the terminal device to receive the paging by using the format of the second signal.

In a possible implementation, a modulation scheme of the first signal may be amplifier shift keying (amplifier shift keying, ASK), frequency shift keying (frequency shift keying, FSK), or on-off keying (on-off keying, OOK).

In a possible implementation, a coding scheme of the first signal is that channel coding is needed. Apolar (Polar) code, a low-density parity-check (low-density parity-check, LDPC) code, a tail biting convolutional code (tail biting convolutional code, TBCC), a turbo (Turbo) code, or a Reed-Muller (Reed-Muller) code is used for the channel coding.

In a possible implementation, a coding scheme of the first signal is that channel coding is not needed. The second signal is a sequence. The first signal does not need cyclic redundancy check (cyclic redundancy check, CRC) attachment.

In a possible implementation, a multiple access scheme of the first signal is frequency division multiple access (frequency division multiple access, FDMA), time division multiple access (time division multiple access, TDMA), code division multiple access (code division multiple access, CDMA), orthogonal frequency division multiple access (orthogonal frequency division multiple access, OFDMA), single-carrier frequency division multiple access (single-carrier frequency division multiple access, SC-FDMA), or non-orthogonal multiple access (non-orthogonal multiple access, NOMA).

In a possible implementation, a modulation scheme of the second signal may be phase shift keying (phase shift keying, PSK) or quadrature amplitude modulation (quadrature amplitude modulation, QAM).

In a possible implementation, a coding scheme of the second signal is that the channel coding is needed. The polar code, the LDPC code, the TBCC, the Turbo code, or the Reed-Muller code is used for the channel coding.

In a possible implementation, a coding scheme of the second signal is that the channel coding is not needed. The second signal is a sequence. The second signal does not need the CRC attachment.

In a possible implementation, a multiple access scheme of the second signal is the FDMA, the TDMA, the CDMA, the OFDMA, the SC-FDMA, or the NOMA.

In this way, when complexity corresponding to modulation (or coding or multiple access) of the first signal is lower than that corresponding to modulation (or coding or multiple access) of the second signal, the processing capability requirement of the terminal device may be reduced, so that receiving power consumption of the first signal is less than receiving power consumption of the second signal, to reduce the power consumption of the terminal device.

In a possible implementation, a power used by the terminal device to receive the first signal from the first network device is less than a power used by the terminal device to receive the second signal from the first network device.

In a specific implementation, the power used by the terminal device to receive the first signal from the first network device is of microwatt (microwatt, µW) magnitude.

In a specific implementation, the power used by the terminal device to receive the second signal from the first network device is of milliwatt (milliwatt, mW) magnitude.

In this way, in the first time period, the terminal device receives the first signal by using the power less than the power used for receiving the second signal, to reduce the power consumption of the terminal device.

In a possible implementation, the terminal device may receive the first signal and the second signal on a same frequency domain resource, where the frequency domain resource may be a frequency range, a frequency band, a carrier, a bandwidth part, a resource block, or a subcarrier.

In this way, the terminal device receives the first signal or the second signal on the same frequency domain resource in a time division multiplexing manner, to avoid respectively configuring receiving resources for the first signal and the second signal, so that signaling overheads and a resource waste are reduced.

In a possible implementation, the terminal device may receive the first signal and the second signal on different frequency domain resources, where the frequency domain resource may be a frequency range, a frequency band, a carrier, a bandwidth part, a resource block, or a subcarrier.

In this way, the first signal and the second signal are allowed to be sent on the different frequency domain resources, so that implementation of the network device is more flexible. The network device is more flexible to allocate the frequency domain resource to the first signal or the second signal. In addition, the first signal and the second signal are sent on the different frequency domain resources, and the power consumption of the terminal device can be further reduced by restricting a bandwidth of the first signal to be less than a bandwidth of the second signal.

In a possible implementation, the method further includes:

In the first time period, the terminal device satisfies at least one of the following: A random access process is not performed; service data is not received and/or sent; and a receiving circuit of the terminal device includes a passive circuit or a semi-active circuit.

In a specific implementation, in the first time period, the receiving circuit of the terminal device is the passive circuit or the semi-active circuit.

In this way, in the first time period, the terminal device may not perform the random access process, and/or not receive and/or send the service data, to reduce a corresponding processing process of the terminal device, so that the power consumption of the terminal device is reduced. In addition, the terminal device may perform receiving by using the passive circuit or the semi-active circuit, to reduce battery power supply of the terminal device, so that the power consumption of the terminal device is reduced.

In a possible implementation, the time information includes first time period information and second time period information, the first time period information is for determining the first time period, and the second time period information is for determining the second time period, where
the first time period information includes at least one of the following: a first cycle, a first start position, a first offset, or first duration; or the first time period information includes a first timer; and
the second time period information includes at least one of the following: a second cycle, a second start position, a second offset, or second duration; or the second time period information includes a second timer.

In a specific implementation, a value of the first cycle is the same as a value of the second cycle.

In a specific implementation, a system frame number of the first start position and/or a system frame number of the second start position may satisfy one of the following formulas:
SFN mod T =0; SFN mod T=offset; and (SFN+offset) mod T=0.

The SFN is the system frame number (system frame number, SFN), and T is the first cycle or the second cycle.

In a specific implementation, a value of the first offset is a natural number, and/or a value of the second offset is a natural number.

In a possible implementation, the first time period is time other than a paging time window (paging time window, PTW) in an extended discontinuous reception (extended discontinuous reception, eDRX) cycle, and the second time period is time corresponding to the PTW in the eDRX cycle; or the first time period is time corresponding to a mobile initiated connection only (mobile initiated connection only, MICO) mode, and the second time period is active time (active time).

In a possible implementation, the obtaining time information includes:
receiving first indication information from a second network device, where the first indication information indicates the terminal device to receive the first signal or the second signal based on the time information; and
determining the time information based on the first indication information.

In a possible implementation, the first indication information carries the time information; the first indication information indicates the terminal device to determine the time information by using an extended discontinuous reception eDRX parameter; or the first indication information indicates the terminal device to determine the time information by using a MICO mode parameter.

In a possible implementation, the first indication information is carried in a registration response message.

In a possible implementation, the method further includes:
sending a request message to the second network device, where the request message requests the second network device to send the time information, or indicates time information requested by the terminal device.

In a possible implementation, the time information requested by the terminal device includes requested time information and/or capability information, where the requested time information includes first time period information and second time period information that are expected by the terminal device, and the capability information indicates that the terminal device supports a capability of receiving the paging based on the signal format of the first signal, or indicates signal format information that is used when the paging is received and that is supported by the terminal device.

In a possible implementation, the first time period information expected by the terminal device includes at least one of the following: a first cycle, a first start position, a first offset, or first duration; or the first time period information expected by the terminal device includes a first timer; and
the second time period information expected by the terminal device includes at least one of the following: a second cycle, a second start position, a second offset, or second duration; or the second time period information expected by the terminal device includes a second timer.

In a possible implementation, the request message is a registration request message.

In this way, the terminal device may send the request message to the second network device to notify the second network device of a requirement of the terminal device on the time information. Accordingly, the second network device may send the first indication information based on the request message sent by the terminal device. A manner in which the terminal device obtains the time information can be more flexible. In addition, signaling overheads and a resource waste that are caused because the second network device sends the time information to an unnecessary terminal device can be avoided.

In a possible implementation, the method further includes at least one of the following:
if the first time period overlaps the time other than the paging time window PTW in the eDRX cycle, determining to receive the paging based on the signal format of the first signal in the first time period;
if the first time period overlaps the time corresponding to the PTW in the eDRX cycle, determining to receive the paging based on the signal format of the second signal in the first time period;
if the second time period overlaps time corresponding to the eDRX cycle, determining to receive the paging based on the signal format of the second signal in the second time period;
if the first time period overlaps the time corresponding to the MICO mode, determining to receive the paging based on the signal format of the first signal in the first time period;
if the first time period overlaps the active time, determining to receive the paging based on the signal format of the second signal in the first time period; or
if the second time period overlaps the time corresponding to the MICO mode or time corresponding to the active time, determining to receive the paging based on the signal format of the second signal in the second time period.

In this way, behavior of the terminal device is standardized, to specify a signal format for receiving a downlink signal from the first network device in an overlapping time period. This avoids unclear behavior of the terminal device when the signal format for receiving the downlink signal is determined.

According to a second aspect, an embodiment of this application provides a communication method. The communication method is applied to a first network device or may be applied to a chip inside the first network device. In the method, the first network device obtains time information, where the time information is for determining a first time period and a second time period; sends a first signal in the first time period, where the first signal is for paging or waking up a terminal device; and sends a second signal in the second time period, where the second signal is for paging the terminal device, or indicates to the terminal device whether to receive paging, where a signal format of the first signal and a signal format of the second signal are different, and the signal format includes at least one of the following: coding, modulation, and multiple access.

In a possible implementation, that the first network device sends a first signal in the first time period, where the first signal is for waking up a terminal device includes: The first network device sends the first signal in the first time period, where the first signal indicates the terminal device to receive the paging by using the format of the second signal.

In a possible implementation, a modulation scheme of the first signal may be amplifier shift keying (amplifier shift keying, ASK), frequency shift keying (frequency shift keying, FSK), or on-off keying (on-off keying, OOK).

In a possible implementation, a coding scheme of the first signal is that channel coding is needed. Apolar (Polar) code, a low-density parity-check (low-density parity-check, LDPC) code, a tail biting convolutional code (tail biting convolutional code, TBCC), a turbo (Turbo) code, or a Reed-Muller (Reed-Muller) code is used for the channel coding.

In a possible implementation, a coding scheme of the first signal is that channel coding is not needed. The second signal is a sequence. The first signal does not need cyclic redundancy check (cyclic redundancy check, CRC) attachment.

In a possible implementation, a multiple access scheme of the first signal is frequency division multiple access (frequency division multiple access, FDMA), time division multiple access (time division multiple access, TDMA), code division multiple access (code division multiple access, CDMA), orthogonal frequency division multiple access (orthogonal frequency division multiple access, OFDMA), single-carrier frequency division multiple access (single-carrier frequency division multiple access, SC-FDMA), or non-orthogonal multiple access (non-orthogonal multiple access, NOMA).

In a possible implementation, a modulation scheme of the second signal may be phase shift keying (phase shift keying, PSK) or quadrature amplitude modulation (quadrature amplitude modulation, QAM).

In a possible implementation, a coding scheme of the second signal is that the channel coding is needed. The polar code, the LDPC code, the TBCC, the Turbo code, or the Reed-Muller code is used for the channel coding.

In a possible implementation, a coding scheme of the second signal is that the channel coding is not needed. The second signal is a sequence. The second signal does not need the CRC attachment.

In a possible implementation, a multiple access scheme of the second signal is the FDMA, the TDMA, the CDMA, the OFDMA, the SC-FDMA, or the NOMA. In a possible implementation, the first network device may send the first signal and the second signal on a same frequency domain resource, where the frequency domain resource may be a frequency range, a frequency band, a carrier, a bandwidth part, a resource block, or a subcarrier. In a possible implementation, the first network device may send the first signal and the second signal on different frequency domain resources, where the frequency domain resource may be a frequency range, a frequency band, a carrier, a bandwidth part, a resource block, or a subcarrier.

In this way, the first signal and the second signal are allowed to be sent on the different frequency domain resources, so that implementation of the network device is more flexible. The network device is more flexible to allocate the frequency domain resource to the first signal or the second signal. In addition, the first signal and the second signal are sent on the different frequency domain resources, and power consumption of the terminal device can be further reduced by restricting a bandwidth of the first signal to be less than a bandwidth of the second signal.

In a possible implementation, the method further includes:

In the first time period, the terminal device satisfies at least one of the following: A random access process is not performed; service data is not received and/or sent; and a receiving circuit of the terminal device includes a passive circuit or a semi-active circuit.

In a specific implementation, in the first time period, the receiving circuit of the terminal device is the passive circuit or the semi-active circuit.

In a possible implementation, the time information includes first time period information and second time period information, the first time period information is for determining the first time period, and the second time period information is for determining the second time period, where
the first time period information includes at least one of the following: a first cycle, a first start position, a first offset, or first duration; or the first time period information includes a first timer; and
the second time period information includes at least one of the following: a second cycle, a second start position, a second offset, or second duration; or the second time period information includes a second timer.

In a specific implementation, a value of the first cycle is the same as a value of the second cycle.

In a specific implementation, a system frame number of the first start position and/or a system frame number of the second start position may satisfy one of the following formulas: SFN mod T=0; SFN mod T=offset; and (SFN+offset) mod T=0.

The SFN is the system frame number (system frame number, SFN), and T is the first cycle or the second cycle.

In a specific implementation, a value of the first offset is a natural number, and/or a value of the second offset is a natural number.

In a possible implementation, the first time period is time other than a paging time window PTW in an extended discontinuous reception eDRX cycle, and the second time period is time corresponding to the PTW in the eDRX cycle; or
the first time period is time corresponding to a mobile initiated connection only MICO mode, and the second time period is active time (active time).

In a possible implementation, the obtaining time information includes: receiving second indication information sent by a second network device, where the second indication information indicates the first network device to send the first signal or the second signal based on the time information; and
determining the time information based on the second indication information.

In a possible implementation, the second indication information carries the time information; the second indication information indicates the first network device to determine the time information by using an extended discontinuous reception eDRX parameter; or the second indication information indicates the first network device to determine the time information by using a MICO mode parameter.

In a possible implementation, the second indication information is carried in a paging message sent by the second network device to the first network device.

In a possible implementation, the method further includes at least one of the following:
if the first time period overlaps the time other than the paging time window PTW in the eDRX cycle, determining to send the paging based on the signal format of the first signal in the first time period;
if the first time period overlaps the time corresponding to the PTW in the eDRX cycle, determining to receive the paging based on the signal format of the second signal in the first time period;
if the second time period overlaps time corresponding to the eDRX cycle, determining to receive the paging based on the signal format of the second signal in the second time period;
if the first time period overlaps the time corresponding to the MICO mode, determining to receive the paging based on the signal format of the first signal in the first time period;
if the first time period overlaps the active time, determining to receive the paging based on the signal format of the second signal in the first time period; or
if the second time period overlaps the time corresponding to the MICO mode or time corresponding to the active time, determining to receive the paging based on the signal format of the second signal in the second time period.

For technical effects brought by some optional implementations of the second aspect, refer to the descriptions of the technical effects of the first aspect or the corresponding implementations of the first aspect.

According to a third aspect, a communication method is provided, and is applied to a second network device or may be applied to a chip inside the second network device. In the method, the second network device sends first indication information to a terminal device, where the first indication information indicates the terminal device to receive a first signal or a second signal based on time information; and sends second indication information to a first network device, where the second indication information indicates the first network device to send the first signal or the second signal based on the time information, where the time information is for determining a first time period and a second time period, a signal format of the first signal received by the terminal device in the first time period and a signal format of the second signal received by the terminal device in the second time period are different, and the signal format includes at least one of the following: coding, modulation, and multiple access; and the first signal is for paging or waking up the terminal device, and the second signal is for paging the terminal device, or indicates to the terminal device whether to receive paging.

In a possible implementation, the method further includes: In the first time period, the terminal device satisfies at least one of the following: A random access process is not performed; service data is not received and/or sent; and a receiving circuit of the terminal device includes a passive circuit or a semi-active circuit.

In a specific implementation, in the first time period, the receiving circuit of the terminal device is the passive circuit or the semi-active circuit.

In a possible implementation, the time information includes first time period information and second time period information, the first time period information is for determining the first time period, and the second time period information is for determining the second time period, where
the first time period information includes at least one of the following: a first cycle, a first start position, a first offset, or first duration; or the first time period information includes a first timer; and
the second time period information includes at least one of the following: a second cycle, a second start position, a second offset, or second duration; or the second time period information includes a second timer.

In a specific implementation, a value of the first cycle is the same as a value of the second cycle.

In a specific implementation, a system frame number of the first start position and/or a system frame number of the second start position may satisfy one of the following formulas: SFN mod T=0; SFN mod T=offset; and (SFN+offset) mod T=0.

The SFN is the system frame number (system frame number, SFN), and T is the first cycle or the second cycle.

In a specific implementation, a value of the first offset is a natural number, and/or a value of the second offset is a natural number.

In a possible implementation, the first time period is time other than a paging time window PTW in an extended discontinuous reception eDRX cycle, and the second time period is time corresponding to the PTW in the eDRX cycle; or the first time period is time corresponding to a mobile initiated connection only MICO mode, and the second time period is active time (active time).

In a possible implementation, the first indication information carries the time information; the first indication information indicates the terminal device to determine the time information by using an extended discontinuous reception eDRX parameter; or the first indication information indicates the terminal device to determine the time information by using a MICO mode parameter.

In a possible implementation, the first indication information is carried in a registration response message.

In a possible implementation, the second indication information carries the time information; the second indication information indicates the first network device to determine the time information by using an extended discontinuous reception eDRX parameter; or the second indication information indicates the first network device to determine the time information by using a MICO mode parameter.

In a possible implementation, the second indication information is carried in a paging message that is received by the first network device from the second network device. In a possible implementation, the method further includes: receiving a request message from the terminal device, where the request message requests the second network device to send the time information, or indicates time information requested by the terminal device.

In a possible implementation, the time information requested by the terminal device includes requested time information and/or capability information, where the requested time information includes first time period information and second time period information that are expected by the terminal device, and the capability information indicates that the terminal device supports a capability of receiving the paging based on the signal format of the first signal, or indicates signal format information that is used when the paging is received and that is supported by the terminal device.

In a possible implementation, the first time period information expected by the terminal device includes at least one of the following: a first cycle, a first start position, a first offset, or first duration; or the first time period information expected by the terminal device includes a first timer; and
the second time period information expected by the terminal device includes at least one of the following: a second cycle, a second start position, a second offset, or second duration; or the second time period information expected by the terminal device includes a second timer.

In a possible implementation, the request message is a registration request message.

In a possible implementation, the method further includes at least one of the following:
if the first time period overlaps the time other than the paging time window PTW in the eDRX cycle, determining to receive the paging based on the signal format of the first signal in the first time period;
if the first time period overlaps the time corresponding to the PTW in the eDRX cycle, determining to receive the paging based on the signal format of the second signal in the first time period;
if the second time period overlaps time corresponding to the eDRX cycle, determining to receive the paging based on the signal format of the second signal in the second time period;
if the first time period overlaps the time corresponding to the MICO mode, determining to receive the paging based on the signal format of the first signal in the first time period;
if the first time period overlaps the active time, determining to receive the paging based on the signal format of the second signal in the first time period; or
if the second time period overlaps the time corresponding to the MICO mode or time corresponding to the active time, determining to receive the paging based on the signal format of the second signal in the second time period.

For the third aspect or the optional implementations of the third aspect, and technical effects, refer to the foregoing descriptions of the technical effects of the corresponding implementations of the first aspect and/or the second aspect.

According to a fourth aspect, a communication apparatus is provided. The communication apparatus may be a terminal device or a chip disposed inside the terminal device. The apparatus includes:
a processing unit, configured to obtain time information, where the time information is for determining a first time period and a second time period; and
a transceiver unit, configured to receive a first signal from a first network device in the first time period, where the first signal is for paging or waking up the terminal device, where the transceiver unit is further configured to receive a second signal from the first network device in the second time period, where the second signal is for paging the terminal device, or indicates to the terminal device whether to receive paging, where
a signal format of the first signal and a signal format of the second signal are different, and the signal format includes at least one of the following: coding, modulation, and multiple access.

In a possible implementation, the transceiver unit is specifically configured to receive the first signal from the first network device in the first time period, where the first signal indicates the terminal device to receive the paging by using the format of the second signal.

In a possible implementation, a modulation scheme of the first signal may be amplifier shift keying (amplifier shift keying, ASK), frequency shift keying (frequency shift keying, FSK), or on-off keying (on-off keying, OOK).

In a possible implementation, a coding scheme of the first signal is that channel coding is needed. Apolar (Polar) code, a low-density parity-check (low-density parity-check, LDPC) code, a tail biting convolutional code (tail biting convolutional code, TBCC), a turbo (Turbo) code, or a Reed-Muller (Reed-Muller) code is used for the channel coding.

In a possible implementation, a coding scheme of the first signal is that channel coding is not needed. The second signal is a sequence. The first signal does not need cyclic redundancy check (cyclic redundancy check, CRC) attachment.

In a possible implementation, a multiple access scheme of the first signal is frequency division multiple access (frequency division multiple access, FDMA), time division multiple access (time division multiple access, TDMA), code division multiple access (code division multiple access, CDMA), orthogonal frequency division multiple access (orthogonal frequency division multiple access, OFDMA), single-carrier frequency division multiple access (single-carrier frequency division multiple access, SC-FDMA), or non-orthogonal multiple access (non-orthogonal multiple access, NOMA).

In a possible implementation, a modulation scheme of the second signal may be phase shift keying (phase shift keying, PSK) or quadrature amplitude modulation (quadrature amplitude modulation, QAM).

In a possible implementation, a coding scheme of the second signal is that the channel coding is needed. The polar code, the LDPC code, the TBCC, the Turbo code, or the Reed-Muller code is used for the channel coding.

In a possible implementation, a coding scheme of the second signal is that the channel coding is not needed. The second signal is a sequence. The second signal does not need the CRC attachment.

In a possible implementation, a multiple access scheme of the second signal is the FDMA, the TDMA, the CDMA, the OFDMA, the SC-FDMA, or the NOMA.

In a possible implementation, a power used to receive the first signal from the first network device is less than a power used by the terminal device to receive the second signal from the first network device.

In a possible implementation, the power used to receive the second signal from the first network device is of milliwatt (milliwatt, mW) magnitude.

In a possible implementation, the transceiver unit is specifically configured to receive the first signal and the second signal on a same frequency domain resource, where the frequency domain resource may be a frequency range, a frequency band, a carrier, a bandwidth part, a resource block, or a subcarrier.

In a possible implementation, the terminal device may receive the first signal and the second signal on different frequency domain resources, where the frequency domain resource may be a frequency range, a frequency band, a carrier, a bandwidth part, a resource block, or a subcarrier.

In this way, the first signal and the second signal are allowed to be sent on the different frequency domain resources, so that implementation of the network device is more flexible. The network device is more flexible to allocate the frequency domain resource to the first signal or the second signal. In addition, the first signal and the second signal are sent on the different frequency domain resources, and power consumption of the UE can be further reduced by restricting a bandwidth of the first signal to be less than a bandwidth of the second signal.

In a possible implementation, in the first time period, the apparatus satisfies at least one of the following: A random access process is not performed; service data is not received and/or sent; and a receiving circuit of the terminal device includes a passive circuit or a semi-active circuit.

In a specific implementation, in the first time period, the receiving circuit of the terminal device is the passive circuit or the semi-active circuit.

In a possible implementation, the time information includes first time period information and second time period information, the first time period information is for determining the first time period, and the second time period information is for determining the second time period, where
the first time period information includes at least one of the following: a first cycle, a first start position, a first offset, or first duration; or the first time period information includes a first timer; and
the second time period information includes at least one of the following: a second cycle, a second start position, a second offset, or second duration; or the second time period information includes a second timer.

In a specific implementation, a value of the first cycle is the same as a value of the second cycle.

In a specific implementation, a system frame number of the first start position and/or a system frame number of the second start position may satisfy one of the following formulas:
SFN mod T =0; SFN mod T=offset; and (SFN+offset) mod T=0.

The SFN is the system frame number (system frame number, SFN), and T is the first cycle or the second cycle.

In a specific implementation, a value of the first offset is a natural number, and/or a value of the second offset is a natural number.

In a possible implementation, the first time period is time other than a paging time window PTW in an extended discontinuous reception eDRX cycle, and the second time period is time corresponding to the PTW in the eDRX cycle; or the first time period is time corresponding to a mobile initiated connection only MICO mode, and the second time period is active time (active time).

In a possible implementation, the transceiver unit is specifically configured to receive first indication information from a second network device, where the first indication information indicates the terminal device to receive the first signal or the second signal based on the time information; and
the processing unit is specifically configured to determine the time information based on the first indication information.

In a possible implementation, the first indication information carries the time information; the first indication information indicates the terminal device to determine the time information by using an extended discontinuous reception eDRX parameter; or the first indication information indicates the terminal device to determine the time information by using a MICO mode parameter.

In a possible implementation, the first indication information is carried in a registration response message.

In a possible implementation, the transceiver unit is further configured to send a request message to the second network device, where the request message requests the second network device to send the time information, or indicates time information requested by the terminal device.

In a possible implementation, the time information requested by the terminal device includes requested time information and/or capability information, where the requested time information includes first time period information and second time period information that are expected by the terminal device, and the capability information indicates that the terminal device supports a capability of receiving the paging based on the signal format of the first signal, or indicates signal format information that is used when the paging is received and that is supported by the terminal device.

In a possible implementation, the first time period information expected by the terminal device includes at least one of the following: a first cycle, a first start position, a first offset, or first duration; or the first time period information expected by the terminal device includes a first timer; and
the second time period information expected by the terminal device includes at least one of the following: a second cycle, a second start position, a second offset, or second duration; or the second time period information expected by the terminal device includes a second timer.

In a possible implementation, the request message is a registration request message.

In a possible implementation, the transceiver unit is specifically configured to perform at least one of the following:
if the first time period overlaps the time other than the paging time window PTW in the eDRX cycle, receiving the paging based on the signal format of the first signal in the first time period;
if the first time period overlaps the time corresponding to the PTW in the eDRX cycle, receiving the paging based on the signal format of the second signal in the first time period;
if the second time period overlaps time corresponding to the eDRX cycle, receiving the paging based on the signal format of the second signal in the second time period;
if the first time period overlaps the time corresponding to the MICO mode, receiving the paging based on the signal format of the first signal in the first time period;
if the first time period overlaps the active time, receiving the paging based on the signal format of the second signal in the first time period; or
if the second time period overlaps the time corresponding to the MICO mode or time corresponding to the active time, receiving the paging based on the signal format of the second signal in the second time period.

For technical effects brought by some optional implementations of the fourth aspect, refer to the descriptions of the technical effects of the first aspect or the corresponding implementations of the first aspect.

According to a fifth aspect, a communication apparatus is provided. The communication apparatus may be a first network device or a chip disposed inside the first network device. The apparatus includes:
a processing unit, configured to obtain time information, where the time information is for determining a first time period and a second time period; and
a transceiver unit, configured to send a first signal in the first time period, where the first signal is for paging or waking up a terminal device, where the transceiver unit is further configured to send a second signal in the second time period, where the second signal is for paging the terminal device, or indicates to the terminal device whether to receive paging, where a signal format of the first signal and a signal format of the second signal are different, and the signal format includes at least one of the following: coding, modulation, and multiple access.

In a possible implementation, the transceiver unit is specifically configured to send, for the first network device, the first signal in the first time period, where the first signal indicates the terminal device to receive the paging by using the format of the second signal.

In a possible implementation, a modulation scheme of the first signal may be amplifier shift keying (amplifier shift keying, ASK), frequency shift keying (frequency shift keying, FSK), or on-off keying (on-off keying, OOK).

In a possible implementation, a coding scheme of the first signal is that channel coding is needed. Apolar (Polar) code, a low-density parity-check (low-density parity-check, LDPC) code, a tail biting convolutional code (tail biting convolutional code, TBCC), a turbo (Turbo) code, or a Reed-Muller (Reed-Muller) code is used for the channel coding.

In a possible implementation, a coding scheme of the first signal is that channel coding is not needed. The second signal is a sequence. The first signal does not need cyclic redundancy check (cyclic redundancy check, CRC) attachment.

In a possible implementation, a multiple access scheme of the first signal is frequency division multiple access (frequency division multiple access, FDMA), time division multiple access (time division multiple access, TDMA), code division multiple access (code division multiple access, CDMA), orthogonal frequency division multiple access (orthogonal frequency division multiple access, OFDMA), single-carrier frequency division multiple access (single-carrier frequency division multiple access, SC-FDMA), or non-orthogonal multiple access (non-orthogonal multiple access, NOMA).

In a possible implementation, a modulation scheme of the second signal may be phase shift keying (phase shift keying, PSK) or quadrature amplitude modulation (quadrature amplitude modulation, QAM).

In a possible implementation, a coding scheme of the second signal is that the channel coding is needed. The polar code, the LDPC code, the TBCC, the Turbo code, or the Reed-Muller code is used for the channel coding.

In a possible implementation, a coding scheme of the second signal is that the channel coding is not needed. The second signal is a sequence. The second signal does not need the CRC attachment.

In a possible implementation, a multiple access scheme of the second signal is the FDMA, the TDMA, the CDMA, the OFDMA, the SC-FDMA, or the NOMA.

In a possible implementation, the first network device sends the first signal and the second signal on a same frequency domain resource, where the frequency domain resource may be a frequency range, a frequency band, a carrier, a bandwidth part, a resource block, or a subcarrier.

In a possible implementation, the terminal device may receive the first signal and the second signal on different frequency domain resources, where the frequency domain resource may be a frequency range, a frequency band, a carrier, a bandwidth part, a resource block, or a subcarrier. In this way, the first signal and the second signal are allowed to be sent on the different frequency domain resources, so that implementation of the network device is more flexible. The network device is more flexible to allocate the frequency domain resource to the first signal or the second signal. In addition, the first signal and the second signal are sent on the different frequency domain resources, and power consumption of the LTE can be further reduced by restricting a bandwidth of the first signal to be less than a bandwidth of the second signal.

In a possible implementation, in the first time period, the apparatus satisfies at least one of the following: A random access process is not performed; service data is not received and/or sent; and a receiving circuit of the terminal device includes a passive circuit or a semi-active circuit.

In a specific implementation, in the first time period, the receiving circuit of the terminal device is the passive circuit or the semi-active circuit.

In a possible implementation, the time information includes first time period information and second time period information, the first time period information is for determining the first time period, and the second time period information is for determining the second time period, where
the first time period information includes at least one of the following: a first cycle, a first start position, a first offset, or first duration; or the first time period information includes a first timer; and
the second time period information includes at least one of the following: a second cycle, a second start position, a second offset, or second duration; or the second time period information includes a second timer.

In a specific implementation, a value of the first cycle is the same as a value of the second cycle.

In a specific implementation, a system frame number of the first start position and/or a system frame number of the second start position may satisfy one of the following formulas: SFN mod T=0; SFN mod T=offset; and (SFN+offset) mod T=0.

The SFN is the system frame number (system frame number, SFN), and T is the first cycle or the second cycle.

In a specific implementation, a value of the first offset is a natural number, and/or a value of the second offset is a natural number.

In a possible implementation, the first time period is time other than a paging time window PTW in an extended discontinuous reception eDRX cycle, and the second time period is time corresponding to the PTW in the eDRX cycle; or
the first time period is time corresponding to a mobile initiated connection only MICO mode, and the second time period is active time (active time).

In a possible implementation, the transceiver unit is specifically configured to receive second indication information sent by a second network device, where the second indication information indicates the first network device to receive the first signal or the second signal based on the time information; and
the processing unit is specifically configured to determine the time information based on the second indication information.

In a possible implementation, the second indication information carries the time information; the second indication information indicates the first network device to determine the time information by using an extended discontinuous reception eDRX parameter; or the second indication information indicates the first network device to determine the time information by using a MICO mode parameter.

In a possible implementation, the second indication information is carried in a paging message sent by the second network device to the first network device.

In a possible implementation, the transceiver unit is further configured to perform at least one of the following:
if the first time period overlaps the time other than the paging time window PTW in the eDRX cycle, receiving the paging based on the signal format of the first signal in the first time period;
if the first time period overlaps the time corresponding to the PTW in the eDRX cycle, receiving the paging based on the signal format of the second signal in the first time period;
if the second time period overlaps time corresponding to the eDRX cycle, receiving the paging based on the signal format of the second signal in the second time period;
if the first time period overlaps the time corresponding to the MICO mode, receiving the paging based on the signal format of the first signal in the first time period;
if the first time period overlaps the active time, receiving the paging based on the signal format of the second signal in the first time period; or
if the second time period overlaps the time corresponding to the MICO mode or time corresponding to the active time, receiving the paging based on the signal format of the second signal in the second time period.

For technical effects brought by some optional implementations of the fifth aspect, refer to the descriptions of the technical effects of the second aspect or the corresponding implementations of the second aspect.

According to a sixth aspect, a communication apparatus is provided. The communication apparatus may be a second network device or a chip disposed inside the second network device. The apparatus includes:
a transceiver unit, configured to send first indication information to a terminal device, where the first indication information indicates the terminal device to receive a first signal or a second signal based on time information, where
the transceiver unit is further configured to send second indication information to a first network device, where the second indication information indicates the first network device to send the first signal or the second signal based on the time information, where
the time information is for determining a first time period and a second time period, a signal format of the first signal received by the terminal device in the first time period and a signal format of the second signal received by the terminal device in the second time period are different, and the signal format includes at least one of the following: coding, modulation, and multiple access; and the first signal is for paging or waking up the terminal device, and the second signal is for paging the terminal device, or indicates to the terminal device whether to receive paging.

In a possible implementation, in the first time period, the apparatus satisfies at least one of the following: A random access process is not performed; service data is not received and/or sent; and a receiving circuit of the terminal device includes a passive circuit or a semi-active circuit.

In a specific implementation, in the first time period, the receiving circuit of the terminal device is the passive circuit or the semi-active circuit.

In a possible implementation, the time information includes first time period information and second time period information, the first time period information is for determining the first time period, and the second time period information is for determining the second time period, where
the first time period information includes at least one of the following: a first cycle, a first start position, a first offset, or first duration; or the first time period information includes a first timer; and
the second time period information includes at least one of the following: a second cycle, a second start position, a second offset, or second duration; or the second time period information includes a second timer.

In a specific implementation, a value of the first cycle is the same as a value of the second cycle.

In a specific implementation, a system frame number of the first start position and/or a system frame number of the second start position may satisfy one of the following formulas: SFN mod T=0; SFN mod T=offset; and (SFN+offset) mod T=0.

The SFN is the system frame number (system frame number, SFN), and T is the first cycle or the second cycle.

In a specific implementation, a value of the first offset is a natural number, and/or a value of the second offset is a natural number.

In a possible implementation, the first time period is time other than a paging time window PTW in an extended discontinuous reception eDRX cycle, and the second time period is time corresponding to the PTW in the eDRX cycle; or the first time period is time corresponding to a mobile initiated connection only MICO mode, and the second time period is active time (active time).

In a possible implementation, the first indication information carries the time information; the first indication information indicates the terminal device to determine the time information by using an extended discontinuous reception eDRX parameter; or the first indication information indicates the terminal device to determine the time information by using a MICO mode parameter.

In a possible implementation, the first indication information is carried in a registration response message.

In a possible implementation, the second indication information carries the time information; the second indication information indicates the first network device to determine the time information by using an extended discontinuous reception eDRX parameter; or the second indication information indicates the first network device to determine the time information by using a MICO mode parameter.

In a possible implementation, the second indication information is carried in a paging message that is received by the first network device from the second network device. In a possible implementation, the transceiver unit is further configured to receive a request message from the terminal device, where the request message requests the second network device to send the time information, or indicates time information requested by the terminal device.

In a possible implementation, the time information requested by the terminal device includes requested time information and/or capability information, where the requested time information includes first time period information and second time period information that are expected by the terminal device, and the capability information indicates that the terminal device supports a capability of receiving the paging based on the signal format of the first signal, or indicates signal format information that is used when the paging is received and that is supported by the terminal device.

In a possible implementation, the first time period information expected by the terminal device includes at least one of the following: a first cycle, a first start position, a first offset, or first duration; or the first time period information expected by the terminal device includes a first timer; and
the second time period information expected by the terminal device includes at least one of the following: a second cycle, a second start position, a second offset, or second duration; or the second time period information expected by the terminal device includes a second timer.

In a possible implementation, the request message is a registration request message.

In a possible implementation, the transceiver unit is further configured to perform at least one of the following:
if the first time period overlaps the time other than the paging time window PTW in the eDRX cycle, receiving the paging based on the signal format of the first signal in the first time period;
if the first time period overlaps the time corresponding to the PTW in the eDRX cycle, receiving the paging based on the signal format of the second signal in the first time period;
if the second time period overlaps time corresponding to the eDRX cycle, receiving the paging based on the signal format of the second signal in the second time period;
if the first time period overlaps the time corresponding to the MICO mode, receiving the paging based on the signal format of the first signal in the first time period;
if the first time period overlaps the active time, receiving the paging based on the signal format of the second signal in the first time period; or
if the second time period overlaps the time corresponding to the MICO mode or time corresponding to the active time, receiving the paging based on the signal format of the second signal in the second time period.

For the sixth aspect or the optional implementations of the sixth aspect, and technical effects, refer to the foregoing descriptions of the technical effects of the corresponding implementations of the first aspect and/or the second aspect.

According to a seventh aspect, a communication apparatus is provided, and includes a processor. The processor is coupled to a memory, and may be configured to execute instructions in the memory, to enable the apparatus to perform the method in any one of the foregoing aspects or the possible implementations of the foregoing aspects. Optionally, the apparatus further includes the memory. Optionally, the apparatus further includes an interface circuit, and the processor is coupled to the interface circuit.

According to an eighth aspect, a processor is provided, and includes an input circuit, an output circuit, and a processing circuit. The processing circuit is configured to: receive a signal through the input circuit, and transmit a signal through the output circuit, to enable the processor to perform the method in any one of the foregoing aspects or the possible implementations of the foregoing aspects.

In a specific implementation process, the processor may be a chip, the input circuit may be an input pin, the output circuit may be an output pin, and the processing circuit may be a transistor, a gate circuit, a trigger, various logic circuits, and the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a ninth aspect, a communication apparatus is provided, and includes a processor and a memory. The processor is configured to: read instructions stored in the memory, receive a signal by using a receiver, and transmit a signal by using a transmitter, to perform the method in any one of the foregoing aspects or the possible implementations of the foregoing aspects.

Optionally, there are one or more processors, and there are one or more memories.

Optionally, the memory may be integrated with the processor, or the memory and the processor are separately disposed.

In a specific implementation process, the memory may be a non-transitory (non-transitory) memory such as a read-only memory (read-only memory, ROM). The memory and the processor may be integrated into a same chip, or may be separately disposed on different chips. A type of the memory and a manner in which the memory and the processor are disposed are not limited in this embodiment of this application.

The processing apparatus in the ninth aspect may be a chip. The processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exists independently.

According to a tenth aspect, a computer program product is provided. The computer program product includes a computer program (which may also be referred to as code or instructions). When the computer program is run, a computer is enabled to perform the method in any one of the foregoing aspects or the possible implementations of the foregoing aspects.

According to an eleventh aspect, a computer-readable medium is provided. The computer-readable medium stores a computer program (which may also be referred to as code or instructions). When the computer program is run on a computer, the computer is enabled to perform the method in any one of the foregoing aspects or the possible implementations of the foregoing aspects.

### BRIEF DESCRIPTION OF DRAWINGS

FIG. 1 is a schematic diagram of a network architecture to which an embodiment of this application is applicable;
FIG. 2 is a schematic diagram of another network architecture to which an embodiment of this application is applicable;
FIG. 3 is a schematic diagram of still another network architecture to which an embodiment of this application is applicable;
FIG. 4 is a schematic diagram of a scenario according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a flowchart of a communication method according to an embodiment of this application;
FIG. 8a is a schematic diagram of a configuration of a first time period and a second time period according to an embodiment of this application;
FIG. 8b is a schematic diagram of another configuration of a first time period and a second time period according to an embodiment of this application;
FIG. 8c is a schematic diagram of still another configuration of a first time period and a second time period according to an embodiment of this application;
FIG. 8d is a schematic diagram of yet another configuration of a first time period and a second time period according to an embodiment of this application;
FIG. 8e is a schematic diagram of yet another configuration of a first time period and a second time period according to an embodiment of this application;
FIG. 9 is another flowchart of a communication method according to an embodiment of this application;
FIG. 10 is still another flowchart of a communication method according to an embodiment of this application;
FIG. 11A and FIG. 11B are yet another flowchart of a communication method according to an embodiment of this application;
FIG. 12 is a schematic block diagram of a communication apparatus according to an embodiment of this application;
FIG. 13 is a schematic block diagram of a terminal device according to an embodiment of this application; and
FIG. 14 is a schematic block diagram of a network device according to an embodiment of this application.

### DESCRIPTION OF EMBODIMENTS

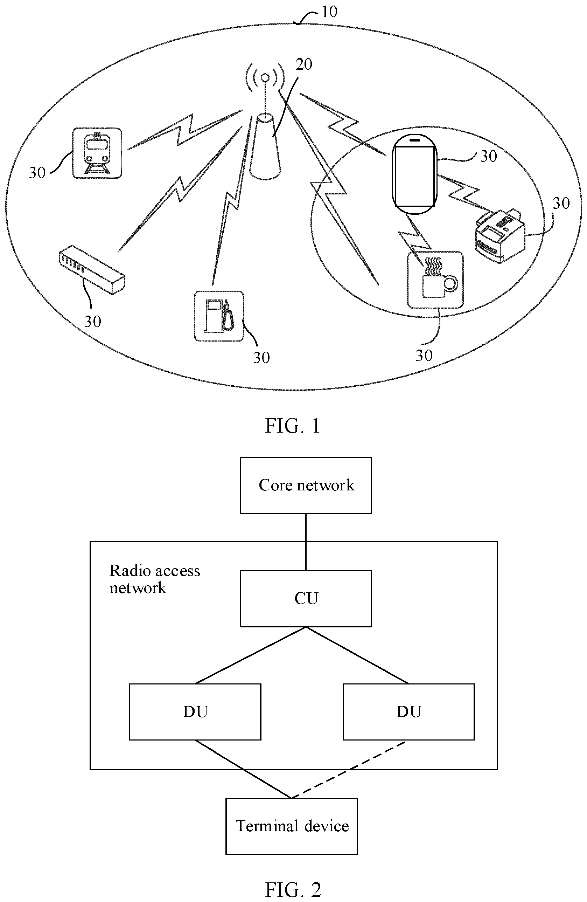

Technologies provided in embodiments of this application may be applied to a communication system 10 shown in FIG. 1. The communication system 10 includes one or more communication apparatuses 30 (for example, terminal devices) that are connected to one or more core network devices via one or more access network devices 20, to implement communication between a plurality of communication devices. The communication system may be, for example, a communication system that supports a 2G, 3G, 4G, or 5G (which may also be referred to as new radio, NR sometimes) access technology, a wireless fidelity (wireless fidelity, Wi-Fi) system, a cellular system related to the 3rd generation partnership project (3rd generation partnership project, 3GPP), a communication system that supports convergence of a plurality of radio technologies, or a future-oriented evolved system.

In this application, the terminal device is a device with a wireless transceiver function, and may be a fixed device, a mobile device, a handheld device (for example, a mobile phone), a wearable device, a vehicle-mounted device, or a wireless apparatus built in the foregoing device (for example, a communication module, a modem, or a chip system). The terminal device is configured to connect people, things, machines, and the like, and may be widely used in various scenarios, for example, including but not limited to the following scenarios: cellular communication, device-to-device (device-to-device, D2D) communication, vehicle to everything (vehicle to everything, V2X), machine-to-machine/machine type communication (machine-to-machine /machine type communication, M2M/MTC), an internet of things (internet of things, IoT), virtual reality (virtual reality, VR), augmented reality (augmented reality, AR), industrial control (industrial control), self driving (self driving), telemedicine (telemedicine), a smart grid (smart grid), smart furniture, smart office, smart wearables, smart transportation, a smart city (smart city), an unmanned aerial vehicle, and a robot. The terminal device may sometimes be referred to as a user equipment (user equipment, LTE), a terminal, an access station, a LTE station, a remote station, a wireless communication device, a user apparatus, or the like. For ease of description, the UE is used as an example for description of the terminal device in this application.

A network device in this application includes, for example, an access network (radio access network, RAN) device and/or a core network (core network, CN) device. The access network device is a device having a wireless transceiver function, and is configured to communicate with the terminal device. The access network device includes but is not limited to a base station (BTS, NodeB, eNodeB/eNB, or gNodeB/gNB) in the communication system, a transmission reception point (transmission reception point, TRP), a subsequently evolved base station in 3GPP, an access node in the Wi-Fi system, a wireless relay node, a wireless backhaul node, or the like. The base station may be a macro base station, a micro base station, a picocell base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a V2X technology may be a road side unit (road side unit, RSU). The following describes the access network device by using an example in which the access network device is the base station. A plurality of network devices in the communication system may be base stations of a same type, or may be base stations of different types. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in this application. A 5G system is used as an example. The core network device includes an access and mobility management function (access and mobility management function, AMF), a session management function (session management function, SMF), a user plane function (user plane function, UPF), or the like.

In embodiments of this application, a communication apparatus configured to implement a function of the network device may be the network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used to describe the technical solutions provided in embodiments of this application.

In embodiments of this application, unless otherwise specified, a quantity of nouns represents "a singular noun or a plural noun", namely, "one or more". "At least one" means one or more, and "a plurality of" means two or more. The term "and/or" describes an association relationship between associated objects, and represents that three relationships may exist. For example, A and/or B may represent the following three cases: Only A exists, both A and B exist, and only B exists. A and B may be singular or plural. The character "/" generally indicates an "or" relationship between the associated objects. For example, A/B indicates A or B. "At least one of the following" or a similar expression thereof means any combination of these items, and includes a singular item or any combination of plural items. For example, at least one of a, b, or c represents a, b, c, a and b, a and c, b and c, or a, b, and c. Herein, a, b, and c may be singular or plural.

Ordinal numbers such as "first" and "second" in embodiments of this application are for distinguishing between a plurality of objects, and are not intended to limit sizes, content, an order, a time sequence, priorities, or importance degrees of the plurality of objects. For example, a first cycle and a second cycle may be a same cycle, or may be different cycles. In addition, such names do not indicate different priorities, importance degrees, or the like corresponding to the two cycles.

FIG. 2 shows another communication network architecture in a communication system 10 according to this application. As shown in FIG. 2, the communication system includes a core network (new core, CN) and a radio access network (radio access network, RAN). A network device (for example, a base station) in the RAN includes a baseband apparatus and a radio frequency apparatus. The baseband apparatus may be implemented by one or more nodes. The radio frequency apparatus may be independently implemented remotely from the baseband apparatus, or may be integrated into the baseband apparatus, or a part of the radio frequency apparatus is implemented remotely from the baseband apparatus and a remaining part is integrated into the baseband apparatus. The network device in the RAN may include a central unit (CU) and a distributed unit (DU), and a plurality of DUs may be controlled by one CU in a centralized manner. The CU and the DU may be obtained through division based on a protocol layer function of a wireless network that the CU and the DU have. For example, functions of a PDCP layer and a layer above the PDCP layer are set on the CU, and functions of protocol layers, for example, an RLC layer and a MAC layer, below the PDCP layer are set on the DU. It should be noted that division based on such a protocol layer is merely an example, and division may alternatively be performed based on another protocol layer. The radio frequency apparatus may not be disposed in the DU but is disposed remotely from the DU, or may be integrated into the DU, or a part of the radio frequency apparatus is disposed remotely from the DU and a remaining part is integrated into the DU. This is not limited in this application.

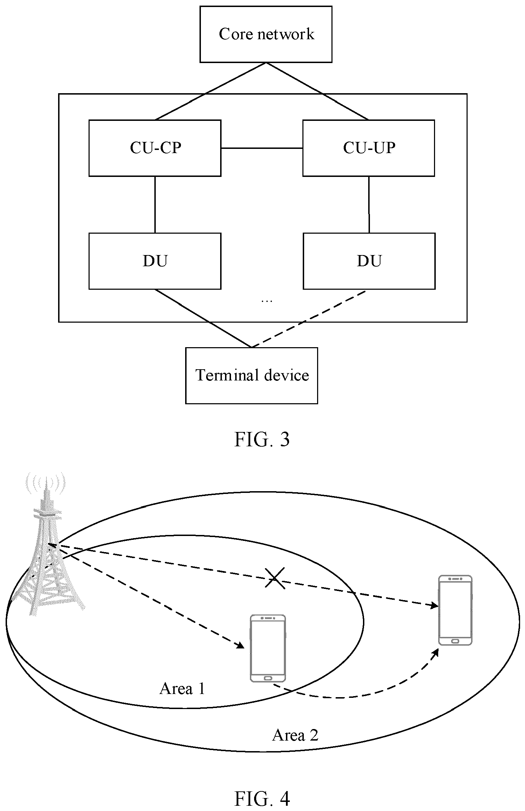

FIG. 3 shows another communication network architecture in a communication system 10 according to this application. Compared with that in the architecture shown in FIG. 2, a control plane (CP) and a user plane (UP) of a CU may be separated and implemented by using different entities: a CU control plane entity (CU-CP entity) and a CU user plane entity (CU-UP entity). In the network architecture, signaling generated by the CU may be sent to a UE via a DU, or signaling generated by the UE may be sent to the CU via the DU. The DU may transparently transmit the signaling to the UE or the CU by directly encapsulating the signaling at a protocol layer without parsing the signaling. In the network architecture, the CU is classified as a network device on a RAN side. In addition, the CU may alternatively be classified as a network device on a CN side. This is not limited in this application.

The following describes related technical features in embodiments of this application.

### 1. RRC state

A terminal device has three RRC states: an RRC connected state (connected state), an RRC idle state (idle state), and an RRC inactive state (inactive state).
(1) RRC connected state (which may also be referred to as a connected state for short, where in this specification, the "connected state" and the "RRC connected state" are a same concept, and may be interchanged): The terminal device establishes an RRC connection to a network, and may perform data transmission.
(2) RRC idle state (which may also be referred to as an idle state for short, where in this specification, the "idle state" and the "RRC idle state" are a same concept, and may be interchanged): The terminal device does not establish the RRC connection to the network, and a base station does not store a context of the terminal device. If the terminal device needs to enter the RRC connected state from the RRC idle state, the terminal device needs to initiate an RRC connection establishment process.
(3) RRC inactive state (which may also be referred to as an inactive state for short, where in this specification, an "inactivated state", a "deactivated state", the "inactive state", the "RRC inactive state", and an "RRC deactivated state" are a same concept, and may be interchanged): The terminal device previously entered the RRC connected state, and then the base station releases the RRC connection, but the base station stores the context of the terminal device. If the terminal device needs to enter the RRC connected state from the RRC inactive state again, the terminal device needs to initiate an RRC resume process (which is also referred to as an RRC connection resume process). Compared with the RRC establishment process, the RRC resume process has shorter latency and lower signaling overheads. However, the base station needs to store the context of the terminal device. This causes storage overheads of the base station.

### 2. Paging mechanism

In a wireless communication system, a network device sends messages to a terminal based on different service requirements. For example, the network device may send a short message (short message), for example, a system message change indication or a notification of an earthquake or a tsunami, to the terminal device. A terminal device in an idle state, an inactive state, or a connected state may receive the short message. For another example, the network device may send a paging message (for paging the terminal device) to the terminal device. After receiving the paging message, a terminal device in an idle state or an inactive state may trigger a random access process to establish an RRC connection.

In embodiments of this application, paging may be carried by using the paging message and/or the short message. Content of the paging message is sent to the terminal device through a physical downlink shared channel (physical downlink shared channel, PDSCH), and the PDSCH is scheduled by using a physical downlink control channel (physical downlink control channel, PDCCH) scrambled by using a paging radio network temporary identifier (paging radio network temporary identifier, P-RNTI). The short message is carried by using the PDCCH scrambled by using the P-RNTI.

The following describes a process in which the terminal device obtains the paging message. The network device may periodically send the paging message. There may be a plurality of paging frames (paging frames, PFs) in one paging cycle, and each PF may include a plurality of paging occasions (paging occasions, POs). A terminal device 1 is used as an example. Both the network device and the terminal device 1 may determine, based on an identifier of the terminal device 1, a PO corresponding to the terminal device 1, so that the network device may send downlink control information (downlink control information, DCI) on the PO corresponding to the terminal device 1, where the DCI is for scheduling the paging message, and the DCI is scrambled by using the P-RNTI; and send the paging message on a time-frequency resource indicated by the DCI. Accordingly, the terminal device 1 may monitor the DCI by using the P-RNTI on the PO, and receive the paging message based on the received DCI, to obtain specific content of the paging message. For example, the paging message may include a paging record list (PagingRecordlist), where the paging record list includes an identifier of one or more terminal devices. After the terminal device in the idle state or the inactive state receives the paging message, if the terminal device in the idle state or the inactive state determines that the paging record list includes an identifier of the terminal device, the terminal device may initiate the random access process to the network device; or if the terminal device in the idle state or the inactive state determines that the paging record list does not include an identifier of the terminal device, the terminal device may continue to receive a paging message in a next paging cycle.

In embodiments of this application, after the network device receives paging indication information sent by a core network device, if the network device determines that the terminal device needs to be paged, the network device may send the DCI for scheduling the paging message, to send the paging message on the resource indicated by the DCI.

In addition, the network device may further determine, based on a requirement (for example, whether a system message change occurs or whether the earthquake or the tsunami needs to be notified), whether the short message needs to be generated. If the system message change occurs or the earthquake, the tsunami, or the like needs to be notified, the short message is generated, where the short message includes the system message change indication or a notification of the earthquake, the tsunami, or the like. Table 1 shows an example of content of the short message.

**Table 1: Example content of a short message**

| Bit | Description |
|---|---|
| 1 | System message change indication |
| 2 | Earthquake and tsunami warning system (earthquake and tsunami warning system, ETWS) message Commercial mobile alert service (commercial mobile alert service, CMAS) message |
| 3 to 8 | Reserved bits |

It can be learned from Table 1 that the short message includes eight bits, where one bit (namely, the bit 1) is for carrying the system message change indication, one bit (namely, the bit 2) is for carrying the ETWS message and the CMAS message, and six remaining bits (namely, the bits 3 to 8) are the reserved bits.

After generating the short message, the network device may carry the short message in the DCI for scheduling the paging message, where the DCI for scheduling the paging message may further include a short message indicator (short message indicator), and the short message indicator may include two bits. In an example, when a value of the two bits is "00", it indicates that the two bits are reserved bits; when a value of the two bits is "01", it indicates that the DCI includes scheduling information of the paging message; when a value of the two bits is "10", it indicates that the DCI includes the short message; or when a value of the two bits is "11", it indicates that the DCI includes scheduling information of the paging message and the short message.

To reduce power consumption of the terminal device, in a possible implementation, when the terminal device is in the idle state or the inactive state, the network device sends a first signal to the terminal device, where the first signal is for paging or waking up the terminal device. Accordingly, the terminal device may receive the first signal by using a first circuit module. Herein, when the first circuit module receives the first signal and when the first circuit module does not receive the first signal and is in a sleep state, energy consumption is low, and is usually of microwatt (microwatt, µW) magnitude. In this way, the terminal device in the idle state or the inactive state may receive the first signal by using the first circuit module that is with the low energy consumption, to reduce the power consumption of the terminal device. To satisfy a low-power-consumption requirement, the first circuit module usually has a simple structure and a low processing capability, and the first circuit module can be activated only after the network device sends a high-level excitation signal (for example, the first signal). According to a requirement of a radio frequency component and a related specification, a power of the excitation signal cannot be infinite. Consequently, coverage in which the terminal device can receive the excitation signal is limited.

For example, as shown in FIG. 4, an outer elliptic area is a coverage area (which is referred to as an area 1 below) of the network device, and an inner elliptic area is an area (which is referred to as an area 2 below) reachable by the first signal sent by the network device to the terminal device. In other words, the area 2 is an area in which the terminal device may receive the first signal sent by the network device. When the terminal device moves in the area 2, the terminal device may receive, by using the first circuit module, the first signal sent by the network device. However, when the terminal device moves from the area 2 to the area 1, because a distance between the network device and the terminal device exceeds a range that the first signal can reach, the terminal device cannot receive, by using the first circuit module, the first signal sent by the network device. In other words, in this scenario, if the network device assumes that the terminal device enables the first circuit module to receive the first signal, although the network device sends the first signal, the terminal device does not receive the first signal. Consequently, the network device and the terminal device have different understandings, and communication performance deteriorates.

Based on this, embodiments of this application provide a communication method and apparatus, to improve performance of a communication system.

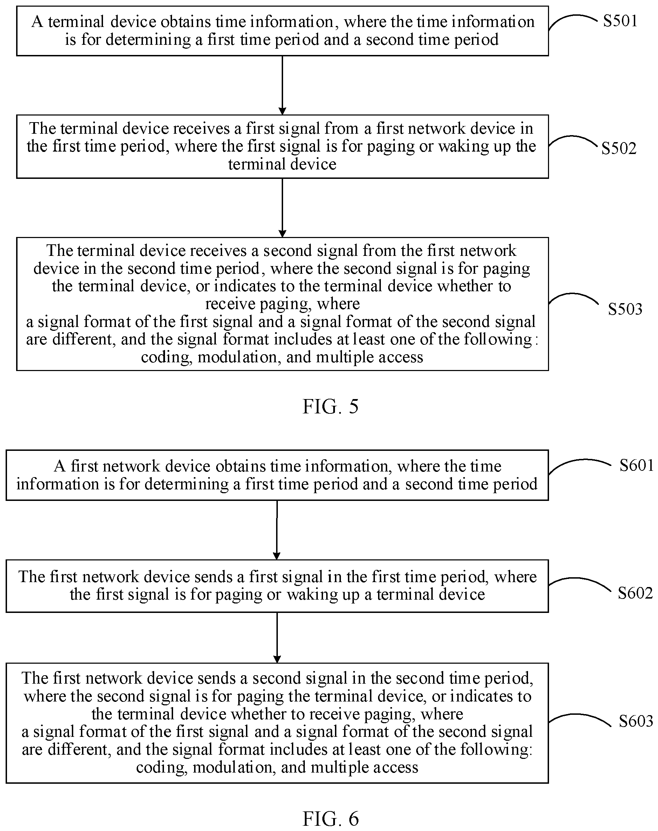

Refer to FIG. 5. An embodiment of a communication method provided in this application includes the following steps.

S501: A terminal device obtains time information, where the time information is for determining a first time period and a second time period.

The time information includes first time period information and second time period information, where the first time period information is for determining the first time period, and the second time period information is for determining the second time period.

There are a plurality of representation manners of the first time period information and the second time period information. For example, the two pieces of time period information may be represented by using a cycle-related parameter, or the two pieces of time period information may be represented by using a timer-related parameter. The following provides descriptions with reference to Manner a1 and Manner a2.

Manner a1: The two pieces of time period information are represented by using the cycle-related parameter.

In this manner, the first time period and the second time period periodically appear in time domain, the first time period information may include at least one of the following: a first cycle, a first start position, a first offset, or first duration, and the second time period information includes at least one of the following: a second cycle, a second start position, a second offset, or second duration.

For example, the first time period information includes the first cycle T, the first start position, the first offset, and the first duration. Correspondingly, the terminal device may determine the first start position based on a system frame number (system frame number, SFN) and the first cycle T, determine a start position of the first time period based on the first start position and the first offset, and determine duration of the first time period based on the first duration.

Optionally, a system frame number of the first start position may satisfy one of the following formulas: SFN mod T=0; SFN mod T=offset; and (SFN+offset) mod T=0.

Optionally, a value of the first offset is a natural number.

Further, when the value of the first offset is 0, the time information may carry the value of the first offset whose value is 0. Alternatively, the time information may not carry the value of the first offset. In other words, if the time information does not include the value of the first offset, the value of the first offset may be 0 by default.

Optionally, values of the first cycle and the second cycle are the same.

Optionally, values of the first start position and the second start position are the same.

Optionally, the first time period and the second time period are two time periods in a same cycle. That is, the first time period and the second time period separately periodically appear in time domain.

It should be noted that the foregoing method for determining the first time period is also applicable to the second time period. Details are not described herein again.

Manner a2: The two pieces of time period information are represented by using the timer-related parameter.

In this manner, the first time period information includes a first timer, and the second time period information includes a second timer. It may be understood that the first time period may be determined by using the first timer, and the second time period may be determined by using the second timer.

For example, the first timer and the second timer are started (or restarted) at a same moment, and a length of the second timer is greater than a length of the first timer. Specifically, the terminal device starts (or restarts) the first timer and the second timer simultaneously. Before the first timer expires, the terminal device determines that corresponding time is the first time period. If the first timer expires but the second timer does not expire, the terminal device determines that corresponding time is the second time period. If the second timer expires, the terminal device restarts the first timer and the second timer.

For another example, the first timer and the second timer are started (or restarted) at different moments. Specifically, the terminal device starts (or restarts) the first timer. Before the first timer expires, the terminal device determines that corresponding time is the first time period. If the first timer expires, the terminal device starts (or restarts) the second timer. Before the second timer expires, the terminal device determines that corresponding time is the second time period. If the second timer expires, the terminal device restarts the first timer.

The terminal device obtains the time information in a plurality of manners. For example, the terminal device may obtain the time information by default (for example, a stipulation in a protocol or a preset rule) or by receiving first indication information (explicitly or implicitly) sent by a second network device. The following provides descriptions with reference to Manner b1 and Manner b2.

Manner b1: The terminal device receives the first indication information from the second network device. Accordingly, the second network device sends the first indication information to the terminal device.

The first indication information indicates the terminal device to receive a first signal or a second signal based on the time information.

Optionally, the first indication information carries the time information. In this case, the terminal device may determine the first time period and the second time period based on the time information carried in the first indication information.

Optionally, the first indication information indicates the terminal device to determine the time information by using an extended discontinuous reception eDRX parameter. In this case, the first time period is time other than a paging time window PTW in an extended discontinuous reception eDRX cycle, and the second time period is time corresponding to the PTW in the eDRX cycle.

Optionally, the first indication information indicates the terminal device to determine the time information by using a mobile initiated connection only MICO mode parameter. The first time period is time corresponding to a MICO mode, and the second time period is active time (active time).

Further, the active time may be time during which a timer T3324 runs.

Optionally, the first indication information is carried in a non-access stratum (non-access stratum, NAS) message.

Further, the NAS message may be a registration response message.

Manner b2: The terminal device obtains the time information from the terminal device.

For example, the terminal obtains the time information by pre-configuring the time information in a subscriber identity module (subscriber identity module, SIM) card or by presetting (for example, the stipulation in the protocol) the time information. In this manner, a communication resource needed for configuring the time information for the terminal device can be saved, or signaling overheads needed for configuring the time information for the terminal device can be reduced.

S502: The terminal device receives the first signal from a first network device in the first time period, where the first signal is for paging or waking up the terminal device.

Optionally, that the terminal device receives the first signal from a first network device in the first time period, where the first signal is for waking up the terminal device includes: The terminal device receives the first signal from the first network device in the first time period, where the first signal indicates the terminal device to receive paging by using a format of the second signal.

Further, in the first time period, if the terminal device receives the first signal indicating to receive the paging by using the format of the second signal, the terminal device may enable (or in other words, start or activate) the format of the second signal to receive the paging. It may be understood that, in this case, the second time period may not arrive. However, the terminal device may receive the paging by using the format of the second signal in advance. In other words, in this case, the terminal device determines that a time unit in which the first signal is received is a start position of a new second time period. Alternatively, the terminal device determines that a k^{th} time unit after a time unit in which the first signal is received is a start time unit of a new second time period. Herein, k is a natural number, and the time unit may be a subframe, a slot, a symbol, or a time unit with another granularity. This is not limited in this application. In addition, a value of k may be preset in a protocol or indicated by a network device. This is not limited in this application.

Further, in the first time period, if the terminal device receives the first signal from the first network device, where the first signal indicates the terminal device to receive the paging by using the format of the second signal. The terminal device may further determine an end position (the same as an end position of the original second time period) of the new second time period based on the second time period information.

It should be noted that the first time period and the second time period periodically appear in time domain, and are connected end to end in time domain. Therefore, in a same cycle, an end position of the first time period is the same as a start position of the second time period. An end position of a new first time period may be determined by using the foregoing method for determining the start position of the new second time period. Details are not described herein again. In addition, a start position (the same as the start position of the original first time period) of the new first time period may be determined by using the first time period information.

It should be noted that, in the first time period, if the terminal device receives the first signal from the first network device, where the first signal indicates the terminal device to receive the paging by using the format of the second signal. The terminal device may receive, by using a first time unit as a start, the first signal and the second signal from the first network device by using the new first time period and the new second time period. The first time unit may be the time unit in which the terminal device receives the first signal, or the first time unit may be the k^{th} time unit after the time unit in which the first signal is received, where k is the natural number. The time unit may be the subframe, the slot, the symbol, or the time unit with the another granularity. This is not limited in this application. In addition, the value of k may be preset in the protocol or indicated by the network device. This is not limited in this application.

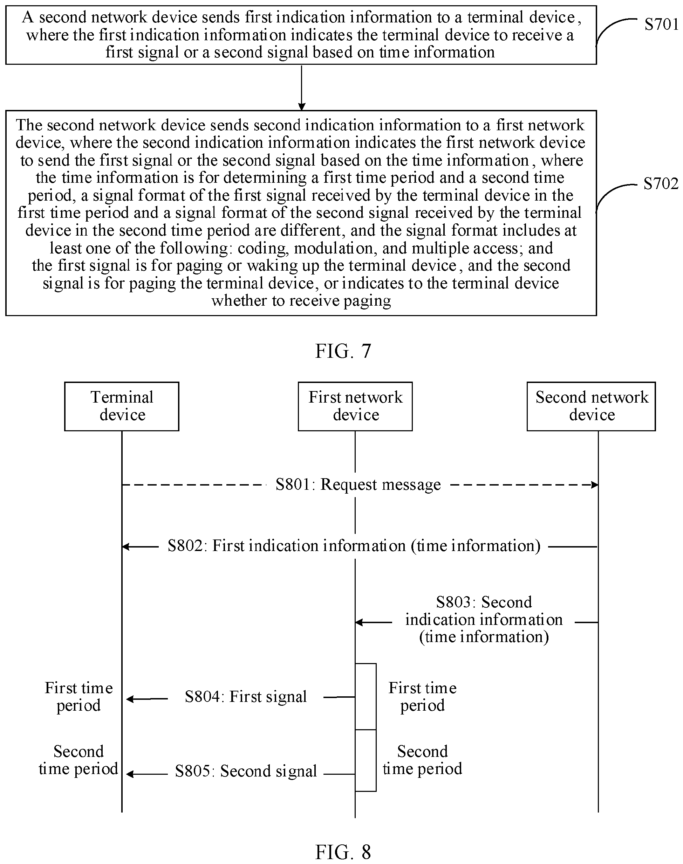

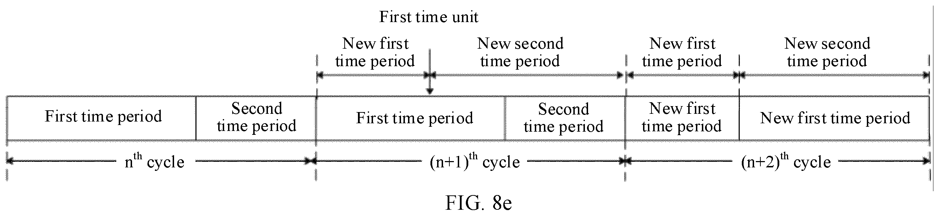

For example, as shown in FIG. 8e, the first time period and the second time period periodically appear in time domain. In an n^{th} cycle, the terminal device may determine the first time period and the second time period based on the time information. In the first time period in an (n+1)^{th} cycle, the terminal device receives the first signal from the first network device, where the first signal indicates the terminal device to receive the paging by using the format of the second signal. The terminal device enables (or in other words, starts or activates), based on the first signal, the format of the second signal to receive the paging. Correspondingly, the terminal device determines the new first time period and the new second time period according to the foregoing method, where the start position (the same as the start position of the original first time period) of the new first time period is determined based on the time information, a time unit corresponding to the end position of the new first time period is the first time unit, a time unit corresponding to the start position of the new second time period is the first time unit, and the end position (the same as the end position of the original second time period) of the new second time period is determined based on the time information. In an (n+2)^{th} cycle, the terminal device receives the first signal and the second signal from the first network device by using the new first time period and the new second time period, where n is a positive integer.

Optionally, the terminal device may receive the first signal from the first network device in a coding, modulation, or multiple access scheme with low complexity in the first time period.

Further, a modulation scheme of the first signal may be amplifier shift keying (amplifier shift keying, ASK), frequency shift keying (frequency shift keying, FSK), or on-off keying (on-off keying, OOK).

Optionally, a coding scheme of the first signal is that channel coding is needed. A polar (Polar) code, a low-density parity-check (low-density parity-check, LDPC) code, a tail biting convolutional code (tail biting convolutional code, TBCC), a turbo (Turbo) code, or a Reed-Muller (Reed-Muller) code is used for the channel coding.

Optionally, a coding scheme of the first signal is that channel coding is not needed. The second signal is a sequence. The first signal does not need cyclic redundancy check (cyclic redundancy check, CRC) attachment.

Optionally, a multiple access scheme of the first signal is frequency division multiple access (frequency division multiple access, FDMA), time division multiple access (time division multiple access, TDMA), code division multiple access (code division multiple access, CDMA), orthogonal frequency division multiple access (orthogonal frequency division multiple access, OFDMA), single-carrier frequency division multiple access (single-carrier frequency division multiple access, SC-FDMA), or non-orthogonal multiple access (non-orthogonal multiple access, NOMA).

Optionally, a power used by the terminal device to receive the first signal from the first network device in the first time period is less than a first threshold. For example, the power used by the terminal device to receive the first signal may be of microwatt (microwatt, µW) magnitude.

Optionally, in the first time period, the terminal device may satisfy at least one of the following:

A random access process is not performed;
service data is not received and/or sent; and
a receiving circuit of the terminal device includes a passive circuit or a semi-active circuit.

Further, the receiving circuit of the terminal device is the passive circuit or the semi-active circuit.

It should be noted that, in this embodiment of this application, a manner in which the terminal device receives the first signal in the first time period may be referred to as "passive reception", "zero-power reception", "low-power reception", or "passive reception". This is not limited in this embodiment of this application.

S503: The terminal device receives the second signal from the first network device in the second time period, where the second signal is for paging the terminal device, or indicates to the terminal device whether to receive the paging.

A signal format of the first signal and the signal format of the second signal are different, and the signal format includes at least one of the following: coding, modulation, and multiple access.

Optionally, the terminal device receives the second signal from the first network device by using the signal format of the second signal in the second time period, where complexity of the signal format of the second signal is higher than complexity of the signal format of the first signal.

Further, a modulation scheme of the second signal may be phase shift keying (phase shift keying, PSK) or quadrature amplitude modulation (quadrature amplitude modulation, QAM).

Optionally, a coding scheme of the second signal is that the channel coding is needed. The polar code, the LDPC code, the TBCC, the Turbo code, or the Reed-Muller code is used for the channel coding.

Optionally, a coding scheme of the second signal is that the channel coding is not needed. The second signal is a sequence. The second signal does not need the CRC attachment.

Optionally, a multiple access scheme of the second signal is the FDMA, the TDMA, the CDMA, the OFDMA, the SC-FDMA, or the NOMA.

Optionally, a power used by the terminal device to receive the second signal from the first network device in the second time period is greater than the power used to receive the first signal from the first network device. For example, the power used by the terminal device to receive the second signal may be of milliwatt (milliwatt, mW) magnitude. It may be understood that the power used by the terminal device to receive the first signal is less than the power used by the terminal device to receive the second signal. In other words, power consumption of receiving the first signal by the terminal device is less than power consumption of receiving the second signal.

In this way, different signal formats are used in different time periods, so that implementation is more flexible. The different signal formats may correspond to different requirements. For example, the signal format corresponding to the first signal corresponds to a low-power-consumption requirement. A coding, modulation, or multiple access scheme with lower complexity may be used for the first signal, to reduce a processing capability requirement of the terminal device, thereby reducing power consumption. However, receiving performance of the first signal may be average. The signal format corresponding to the second signal corresponds to a wide-coverage requirement. A coding, modulation, or multiple access scheme with higher complexity than that of the coding, modulation, or multiple access scheme used for the first signal may be used for the second signal. Receiving performance of the second signal can be better ensured, and the wide-coverage requirement can be satisfied. However, power consumption is slightly higher than that of the first signal. In addition, it is specified that the different signal formats are used in the different time periods, so that different requirements, for example, the low-power-consumption requirement and the wide-coverage requirement, can be ensured.

Optionally, the terminal device may receive the first signal and the second signal on a same frequency domain resource. The frequency domain resource may be a frequency range (frequency range), a frequency band (frequency band), a carrier (carrier), a bandwidth part (bandwidth part, BWP), a resource block (resource block, RB), a subcarrier, or another unit of the frequency domain resource. This is not limited in this application.

Optionally, the terminal device may receive the first signal and the second signal on different frequency domain resources, where the frequency domain resource may be a frequency range, a frequency band, a carrier, a bandwidth part, a resource block, or a subcarrier.

In this way, the first signal and the second signal are allowed to be sent on the different frequency domain resources, so that implementation of the network device is more flexible. The network device is more flexible to allocate the frequency domain resource to the first signal or the second signal. In addition, the first signal and the second signal are sent on the different frequency domain resources, and the power consumption of the UE can be further reduced by restricting a bandwidth of the first signal to be less than a bandwidth of the second signal.

Refer to FIG. 6. An embodiment of a communication method provided in this application includes the following steps.

S601: A first network device obtains time information, where the time information is for determining a first time period and a second time period.

The time information includes first time period information and second time period information, where the first time period information is for determining the first time period, and the second time period information is for determining the second time period.

There are a plurality of representation manners of the first time period information and the second time period information. For example, the two pieces of time period information may be represented by using a cycle-related parameter, or the two pieces of time period information may be represented by using a timer-related parameter.

It should be noted that, for related descriptions of the time information in S601, refer to the related descriptions of S501. Details are not described herein again.

The first network device obtains the time information in a plurality of manners. For example, the first network device may obtain the time information by default (for example, a stipulation in a protocol or a preset rule) or by receiving second indication information (explicitly or implicitly) sent by a second network device. The following provides descriptions with reference to Manner c1 and Manner c2.

Manner c1: The first network device receives the second indication information of the second network device. Accordingly, the second network device sends the second indication information to the first network device.

The second indication information indicates the first network device to receive a first signal or a second signal based on the time information.

Optionally, the second indication information carries the time information. In this case, the first network device may determine the first time period and the second time period based on the time information carried in the second indication information.

Optionally, the second indication information indicates the first network device to determine the time information by using an extended discontinuous reception eDRX parameter. In this case, the first time period is time other than a paging time window PTW in an extended discontinuous reception eDRX cycle, and the second time period is time corresponding to the PTW in the eDRX cycle.

Optionally, the second indication information indicates the first network device to determine the time information by using a mobile initiated connection only MICO mode parameter. The first time period is time corresponding to a MICO mode, and the second time period is active time (active time).

Further, the active time may be time during which a timer T3324 runs. T3324 is a name of a timer that is in an active state and that is of a terminal device. Duration of the timer is determined by the terminal device and the second network device through negotiation. During running of the timer, the terminal device may be paged. In other words, during running of the timer, the first network device and/or the second network device may page the terminal device. In other words, during running of the timer, the terminal device may receive paging sent by the first network device and/or the second network device.

Optionally, the second indication information is carried in a paging message sent by the second network device to the first network device.

Manner c2: The first network device obtains the time information from the first network device.

For example, the first network device obtains the time information by presetting (for example, the stipulation in the protocol) the time information. In this manner, a communication resource needed for configuring the time information for the first network device can be saved, or signaling overheads needed for configuring the time information for the first network device can be reduced.

S602: The first network device sends the first signal in the first time period, where the first signal is for paging or waking up the terminal device.

Optionally, that the first network device sends the first signal to the terminal device in the first time period, where the first signal is for waking up the terminal device includes: The first network device sends the first signal to the terminal device in the first time period, where the first signal indicates the terminal device to receive the paging by using a format of the second signal.

Optionally, the first network device may send the first signal to the terminal device in a coding, modulation, or multiple access scheme with low complexity in the first time period.

Further, a modulation scheme of the first signal may be amplifier shift keying (amplifier shift keying, ASK), frequency shift keying (frequency shift keying, FSK), or on-off keying (on-off keying, OOK).

Optionally, a coding scheme of the first signal is that channel coding is needed. A polar code, an LDPC code, a TBCC, a Turbo code, or a Reed-Muller code is used for the channel coding.

Optionally, a coding scheme of the first signal is that channel coding is not needed. The first signal is a sequence. The first signal does not need CRC attachment.

Optionally, a multiple access scheme of the first signal is FDMA, TDMA, CDMA, OFDMA, SC-FDMA, or NOMA.

S603: The first network device sends the second signal in the second time period, where the second signal is for paging the terminal device, or indicates to the terminal device whether to receive the paging.

A signal format of the first signal and the signal format of the second signal are different, and the signal format includes at least one of the following: coding, modulation, and multiple access.

Optionally, the first network device may send the second signal to the terminal device in a coding, modulation, or multiple access scheme with high complexity in the second time period.

Further, a modulation scheme of the second signal may be phase shift keying (phase shift keying, PSK) or quadrature amplitude modulation (quadrature amplitude modulation, QAM).

Optionally, a coding scheme of the second signal is that the channel coding is needed. The polar code, the LDPC code, the TBCC, the Turbo code, or the Reed-Muller code is used for the channel coding.

Optionally, a coding scheme of the second signal is that the channel coding is not needed. The second signal is a sequence. The second signal does not need the CRC attachment.

Optionally, a multiple access scheme of the second signal is the FDMA, the TDMA, the CDMA, the OFDMA, the SC-FDMA, or the NOMA.

Optionally, the first network device may send the first signal and the second signal on a same frequency domain resource. The frequency domain resource may be a frequency range, a frequency band, a carrier, a bandwidth part (bandwidth part, BWP), a resource block (resource block, RB), a subcarrier, or another unit of the frequency domain resource. This is not limited in this application.

In a possible implementation, the terminal device may receive the first signal and the second signal on different frequency domain resources, where the frequency domain resource may be a frequency range, a frequency band, a carrier, a bandwidth part, a resource block, or a subcarrier.

In this way, the first signal and the second signal are allowed to be sent on the different frequency domain resources, so that implementation of the network device is more flexible. The network device is more flexible to allocate the frequency domain resource to the first signal or the second signal. In addition, the first signal and the second signal are sent on the different frequency domain resources, and power consumption of the UE can be further reduced by restricting a bandwidth of the first signal to be less than a bandwidth of the second signal.

Refer to FIG. 7. An embodiment of a communication method provided in this application includes the following steps.

S701: A second network device sends first indication information to a terminal device, where the first indication information indicates the terminal device to receive a first signal or a second signal based on time information.

It should be noted that, for related descriptions of the first indication information in S701, refer to the related descriptions of S501. Details are not described herein again.

S702: The second network device sends second indication information to a first network device, where the second indication information indicates the first network device to send the first signal or the second signal based on the time information.

The time information is for determining a first time period and a second time period, a signal format of the first signal received by the terminal device in the first time period and a signal format of the second signal received by the terminal device in the second time period are different, and the signal format includes at least one of the following: coding, modulation, and multiple access.

The first signal is for paging or waking up the terminal device, and the second signal is for paging the terminal device, or indicates to the terminal device whether to receive paging.

It should be noted that, for related descriptions of the second indication information in S702, refer to the related descriptions of S602. Details are not described herein again.

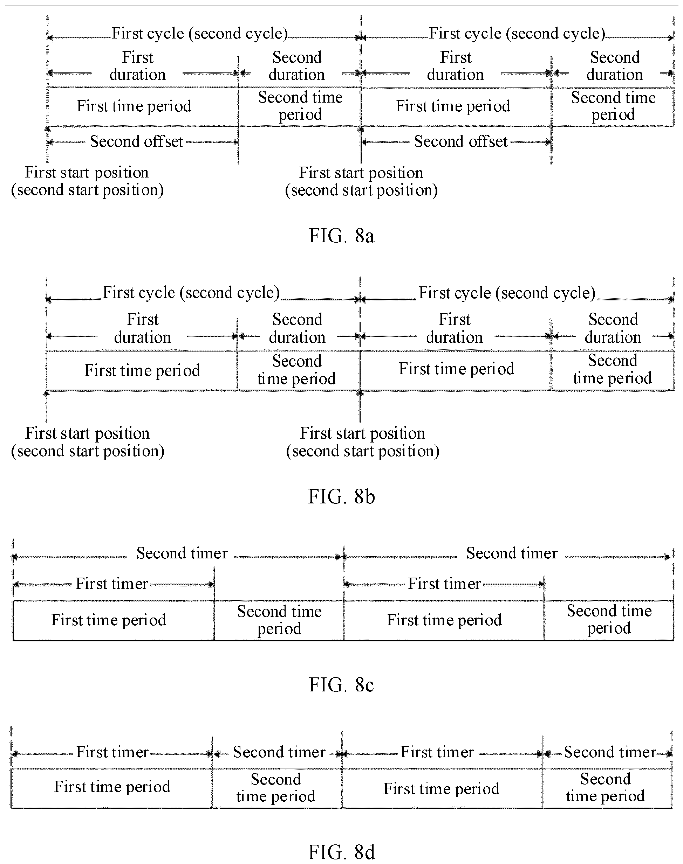

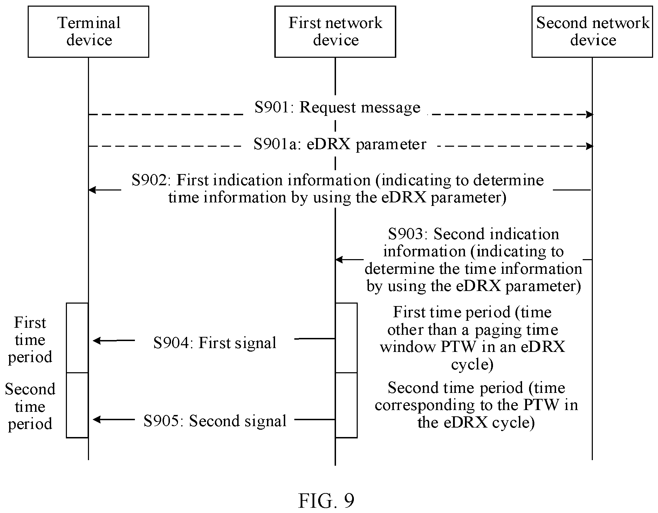

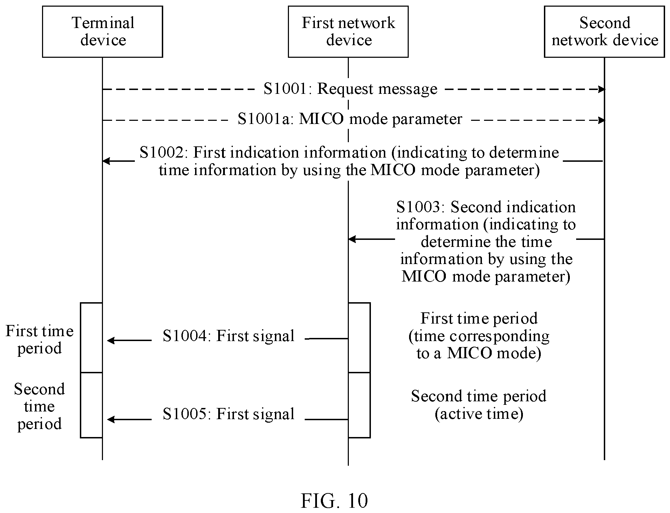

Based on the solutions in FIG. 5 to FIG. 7, FIG. 8 to FIG. 10 separately provide detailed examples of the communication methods. An embodiment corresponding to FIG. 8 describes a case in which a terminal device negotiates with a second network device to determine time information, and the second network device separately sends the time information to the terminal device and a first network device. An embodiment corresponding to FIG. 9 describes a case in which a second network device separately explicitly or implicitly indicates a terminal device and a first network device to determine time information by using an eDRX parameter. An embodiment corresponding to FIG. 10 describes a case in which a second network device separately explicitly or implicitly indicates a terminal device and a first network device to determine time information by using a MICO mode parameter.

FIG. 8 is a flowchart of an embodiment of a communication method according to embodiments of this application. The following steps are included.

S801: A terminal device sends a request message to a second network device. Accordingly, the second network device receives the request message sent by the terminal device.

In an optional step, the request message requests the second network device to send time information, or indicates time information requested by the terminal device.

Optionally, the time information requested by the terminal device includes requested time information and/or capability information.

The requested time information includes first time period information and second time period information that are expected by the terminal device, and the capability information indicates that the terminal device supports a capability of receiving paging based on a signal format of a first signal, or indicates signal format information that is used when the paging is received and that is supported by the terminal device.

Further, there are a plurality of representation manners of the first time period information and the second time period information that are expected by the terminal device. For example, there are a plurality of representation manners in which a cycle-related parameter may be used. For example, the two pieces of time period information may be represented by using the cycle-related parameter, or the two pieces of time period information may be represented by using a timer-related parameter. For an indication manner of two pieces of expected time period information, refer to the related descriptions of the first time period information and the second time period information in S501. Details are not described herein again.

Further, the signal format information that is used when the paging is received and that is supported by the terminal device includes the signal format of the first signal and/or a signal format of a second signal.

Further, there are a plurality of specific implementations of the capability information. In a possible implementation, the capability information may include one or more bits (bits), and may indicate different capabilities by using different values of the bit. For example, the capability information occupies one bit. If a value of the bit is "1", the capability information may indicate that the terminal device supports the capability of receiving the paging based on the signal format of the first signal; or if a value of the bit is "0", the capability information may indicate that the terminal device does not support the capability of receiving the paging based on the signal format of the first signal.

In another possible implementation, the capability information may include one or more fields, and the capability information is indicated by whether the one or more fields exist. For example, the capability information occupies one field. If the terminal device sends the capability information, the capability information indicates that the terminal device supports the capability of receiving the paging based on the signal format of the first signal; or if the terminal device does not send the capability information, the capability information indicates that the terminal device does not support the capability of receiving the paging based on the signal format of the first signal.

Optionally, the request message may be carried in a non-access stratum (non-access stratum, NAS) message. Further, the request message may be a registration request message.

S802: The second network device sends first indication information to the terminal device. Accordingly, the terminal device receives the first indication information from the second network device.

The first indication information indicates the terminal device to receive the first signal or the second signal based on the time information.

Optionally, the first indication information carries the time information. In this case, the terminal device may determine a first time period and a second time period based on the time information carried in the first indication information.

The time information includes first time period information and second time period information, where the first time period information is for determining the first time period, and the second time period information is for determining the second time period.

There are a plurality of representation manners of the first time period information and the second time period information. For example, the two pieces of time period information may be represented by using a cycle-related parameter, or the two pieces of time period information may be represented by using a timer-related parameter. The following provides descriptions with reference to Manner d1 and Manner d2.

Manner d1: The two pieces of time period information are represented by using the cycle-related parameter.

In this manner, the first time period and the second time period periodically appear in time domain, the first time period information may include at least one of the following: a first cycle, a first start position, a first offset, or first duration, and the second time period information includes at least one of the following: a second cycle, a second start position, a second offset, or second duration.

For example, the first time period information includes the first cycle T, the first start position, the first offset, and the first duration. Correspondingly, the terminal device may determine the first start position based on a system frame number (system frame number, SFN) and the first cycle T, determine a start position of the first time period based on the first start position and the first offset, and determine duration of the first time period based on the first duration.

Optionally, a system frame number of the first start position may satisfy one of the following formulas: SFN mod T=0; SFN mod T=offset; and (SFN+offset) mod T=0.

Optionally, a value of the first offset is a natural number.

Further, when the value of the first offset is 0, the time information may include the value of the first offset whose value is 0. Alternatively, the time information may not include the value of the first offset. In other words, if the time information does not include the value of the first offset, the value of the first offset may be 0 by default.

Optionally, values of the first cycle and the second cycle are the same. Optionally, values of the first start position and the second start position are the same.

Optionally, the first time period and the second time period are two time periods in a same cycle.

It should be noted that the foregoing method for determining the first time period is also applicable to the second time period. Details are not described herein again.

For example, the first time period information includes the first cycle T, the first start position, the first offset, and the first duration, and the second time period information includes the second cycle, the second start position, the second offset, and the second duration. As shown in FIG. 8a, the values of the first cycle and the second cycle are the same, and the values of the first start position and the second start position are the same. The first offset, the second offset, the first duration, and the second duration are independently configured. The first time period and the second time period do not overlap in time domain. In FIG. 8a, the value of the first offset is equal to 0.

For example, as shown in FIG. 8b, in this example, the values of the first cycle and the second cycle are the same, the values of the first start position and the second start position are the same, and values of the first offset and the second offset are the same. The first duration and the second duration are independently configured. The first time period and the second time period are connected end to end, and do not overlap in time domain. In FIG. 8b, the values of the two offsets are both 0.

Manner d2: The two pieces of time period information are represented by using the timer-related parameter.

In this manner, the first time period information includes a first timer, and the second time period information includes a second timer. It may be understood that the first time period may be determined by using the first timer, and the second time period may be determined by using the second timer.

For example, as shown in FIG. 8c, the first timer and the second timer are started (or restarted) at a same moment, and a length of the second timer is greater than a length of the first timer. Specifically, the terminal device starts (or restarts) the first timer and the second timer simultaneously. Before the first timer expires, the terminal device determines that corresponding time is the first time period. If the first timer expires but the second timer does not expire, the terminal device determines that corresponding time is the second time period. If the second timer expires, the terminal device restarts the first timer and the second timer.

For another example, as shown in FIG. 8d, the first timer and the second timer are started (or restarted) at different moments. Specifically, the terminal device starts (or restarts) the first timer. Before the first timer expires, the terminal device determines that corresponding time is the first time period. If the first timer expires, the terminal device starts (or restarts) the second timer. Before the second timer expires, the terminal device determines that corresponding time is the second time period. If the second timer expires, the terminal device restarts the first timer.

Optionally, the first indication information is carried in a non-access stratum (non-access stratum, NAS) message.

Further, the NAS message may be a registration response message.

S803: The second network device sends second indication information to a first network device. Accordingly, the first network device receives the second indication information from the second network device.

The second indication information indicates the first network device to receive the first signal or the second signal based on the time information.

Optionally, the second indication information carries the time information. In this case, the first network device may determine the first time period and the second time period based on the time information carried in the first indication information.

Optionally, the second indication information is carried in a paging message sent by the second network device to the first network device.

It should be noted that, for related descriptions of the time information in S803, refer to the related descriptions of S802. Details are not described herein again.

It should be noted that S802 may be performed before S803, S802 may be performed after S803, or S802 and S803 may be performed simultaneously. A sequence of S802 and S803 is not limited in this embodiment of this application.

S804: The first network device sends the first signal to the terminal device in the first time period. Accordingly, the terminal device receives the first signal from the first network device, where the first signal is for paging or waking up the terminal device.

It should be noted that, for related descriptions of that the first network device sends the first signal to the terminal device in the first time period in S804, refer to the related descriptions of S602. Details are not described herein again.

It should be noted that, for related descriptions of that the terminal device receives the first signal from the first network device in the first time period in S804, refer to the related descriptions of S502. Details are not described herein again.

S805: The first network device sends the second signal to the terminal device in the second time period. Accordingly, the terminal device receives the second signal from the first network device, where the second signal is for paging the terminal device, or indicates to the terminal device whether to receive the paging.

It should be noted that, for related descriptions of that the first network device sends the second signal to the terminal device in the second time period in S805, refer to the related descriptions of S603. Details are not described herein again.

It should be noted that, for related descriptions of that the terminal device receives the second signal from the first network device in the second time period in S805, refer to the related descriptions of S503. Details are not described herein again.

Therefore, according to method in which the terminal device negotiates with the second network device and the second network device separately indicates the terminal device and the first network device, the signal formats used by the terminal device to receive the downlink signals from the first network device in the two time periods are specified. This helps improve reliability of receiving the downlink signals by the terminal device, thereby improving communication performance.

FIG. 9 is a flowchart of an embodiment of a communication method according to embodiments of this application. The following steps are included.

S901: A terminal device sends a request message to a second network device. Accordingly, the second network device receives the request message sent by the terminal device.

In an optional step, the request message requests the second network device to send time information.

Optionally, time information requested by the terminal device includes capability information, and the capability information indicates that the terminal device supports a capability of receiving paging based on a signal format of a first signal, or indicates signal format information that is used when the paging is received and that is supported by the terminal device.

Further, the signal format information that is used when the paging is received and that is supported by the terminal device includes the signal format of the first signal and/or a signal format of a second signal.

Further, there are a plurality of specific implementations of the capability information. In a possible implementation, the capability information may include one or more bits (bits), and may perform indication by using different values of the bit. For example, the capability information occupies one bit. If a value of the bit is "1", the capability information may indicate that the terminal device supports the capability of receiving the paging based on the signal format of the first signal; or if a value of the bit is "0", the capability information may indicate that the terminal device does not support the capability of receiving the paging based on the signal format of the first signal.

In another possible implementation, the capability information may include one or more fields, and the capability information is indicated by whether the one or more fields exist. For example, the capability information occupies one field. If the terminal device sends the capability information, the capability information indicates that the terminal device supports the capability of receiving the paging based on the signal format of the first signal; or if the terminal device does not send the capability information, the capability information indicates that the terminal device does not support the capability of receiving the paging based on the signal format of the first signal.

Optionally, the request message may be carried in a non-access stratum (non-access stratum, NAS) message. Further, the request message may be a registration request message.

S901a: The terminal device sends an eDRX parameter to the second network device.

The eDRX parameter includes an eDRX cycle T_{eDRX} and a length L of a paging time window (paging time window, PTW).

It should be noted that S901 may be performed before S901a, S901 may be performed after S901a, or S901 and S901a may be performed simultaneously. A sequence of S901 and S901a is not limited in this embodiment of this application.

Optionally, if S901 and S901a are performed simultaneously, the eDRX parameter may be carried in the request message.

S902: The second network device sends first indication information to the terminal device. Accordingly, the terminal device receives the first indication information from the second network device.

The first indication information indicates the terminal device to receive the first signal or the second signal based on the time information.

Optionally, the first indication information indicates the terminal device to determine the time information by using the extended discontinuous reception eDRX parameter. In this case, a first time period is time other than the paging time window PTW in the extended discontinuous reception eDRX cycle, and a second time period is time corresponding to the PTW in the eDRX cycle.

Further, a specific indication manner of the first indication information may be explicit indication or implicit indication. The following provides descriptions with reference to Manner e1 and Manner e2.

Manner e1: The first indication information is indicated explicitly.

It may be understood that, if the explicit indication is used, the second network device may perform indication based on an explicit bit (or field). Accordingly, the terminal device may determine corresponding information based on the explicit bit (or field).

For example, the first indication information occupies one bit. If a value of the bit is " 1", the first indication information indicates the terminal device to determine the time information by using the extended discontinuous reception eDRX parameter; or if a value of the bit is "0", the bit may be a protocol reserved bit, or indicate the terminal device not to determine the time information by using the extended discontinuous reception eDRX parameter.

For another example, the first indication information is indicated by one field. If the second network device sends the field, the first indication information indicates the terminal device to determine the time information by using the extended discontinuous reception eDRX parameter; or if the second network device does not send the field, the first indication information indicates the terminal device not to determine the time information by using the extended discontinuous reception eDRX parameter.

Manner e2: The first indication information is indicated implicitly.

It may be understood that, if the implicit indication is used, the second network device may perform implicit indication based on an existing bit (or field) or other information, and does not need to perform indication by using a separate bit (or field).

For example, if the second network device sends the eDRX parameter and the capability information to the terminal device, it implies that the second network device sends the first indication information to the terminal device. In other words, the eDRX parameter and the capability information implicitly carry the first indication information. Accordingly, if the terminal device receives the eDRX parameter and the capability information, the terminal device may learn that the second network device indicates the terminal device to determine the time information by using the eDRX parameter.

Optionally, the first indication information is carried in a non-access stratum (non-access stratum, NAS) message.

Further, the NAS message may be a registration response message.

S903: The second network device sends second indication information to a first network device. Accordingly, the first network device receives the second indication information from the second network device.

The second indication information indicates the first network device to receive the first signal or the second signal based on the time information.

Optionally, the second indication information indicates the first network device to determine the time information by using the extended discontinuous reception eDRX parameter. In this case, the first time period is the time other than the paging time window PTW in the extended discontinuous reception eDRX cycle, and the second time period is the time corresponding to the PTW in the eDRX cycle.

Further, a specific indication manner of the second indication information may be explicit indication or implicit indication. The following provides descriptions with reference to Manner f1 and Manner f2.

Manner f1: The second indication information is indicated explicitly.

It may be understood that, if the explicit indication is used, the second network device may perform indication based on an explicit bit (or field). Accordingly, the first network device may determine corresponding information based on the explicit bit (or field).

For example, the second indication information occupies one bit. If a value of the bit is "1", the second indication information indicates the first network device to determine the time information by using the extended discontinuous reception eDRX parameter; or if a value of the bit is "0", the bit may be a protocol reserved bit, or indicate the first network device not to determine the time information by using the extended discontinuous reception eDRX parameter.

For another example, the second indication information is indicated by one field. If the second network device sends the field, the second indication information indicates the first network device to determine the time information by using the extended discontinuous reception eDRX parameter; or if the second network device does not send the field, the second indication information indicates the first network device not to determine the time information by using the extended discontinuous reception eDRX parameter.

Manner f2: The second indication information is indicated implicitly.

It may be understood that, if the implicit indication is used, the second network device may perform implicit indication based on an existing bit (or field) or other information, and does not need to perform indication by using a separate bit (or field).

For example, if the second network device sends the eDRX parameter and the capability information to the first network device, it implies that the second network device sends the first indication information to the first network device. In other words, the eDRX parameter and the capability information implicitly carry the first indication information. Accordingly, if the first network device receives the eDRX parameter and the capability information, the first network device may learn that the second network device indicates the first network device to determine the time information by using the eDRX parameter.

Optionally, the second indication information is carried in a paging message sent by the second network device to the first network device.

It should be noted that S902 may be performed before S903, S902 may be performed after S903, or S902 and S903 may be performed simultaneously. A sequence of S902 and S903 is not limited in this embodiment of this application.

S904: The first network device sends the first signal to the terminal device in the first time period. Accordingly, the terminal device receives the first signal from the first network device, where the first signal is for paging or waking up the terminal device.

It should be noted that, for related descriptions of that the first network device sends the first signal to the terminal device in the first time period in S904, refer to the related descriptions of S602. Details are not described herein again.

It should be noted that, for related descriptions of that the terminal device receives the first signal from the first network device in the first time period in S904, refer to the related descriptions of S502. Details are not described herein again.

S905: The first network device sends the second signal to the terminal device in the second time period. Accordingly, the terminal device receives the second signal from the first network device, where the second signal is for paging the terminal device, or indicates to the terminal device whether to receive the paging.

It should be noted that, for related descriptions of that the first network device sends the second signal to the terminal device in the second time period in S905, refer to the related descriptions of S603. Details are not described herein again.

It should be noted that, for related descriptions of that the terminal device receives the second signal from the first network device in the second time period in S905, refer to the related descriptions of S503. Details are not described herein again.

Therefore, according to this embodiment of this application, the two time periods are bound to an eDRX mechanism, and the second network device separately explicitly or implicitly indicates the terminal device and the first network device to determine the first time period and the second time period by using the eDRX parameter. The signal formats used by the terminal device to receive the downlink signals from the first network device in the two time periods are specified. This helps improve reliability of receiving the downlink signals by the terminal device, thereby improving communication performance. In addition, signaling overheads of additionally configuring the first time period and the second time period can be reduced.

FIG. 10 is a flowchart of an embodiment of a communication method according to embodiments of this application. The following steps are included.

S1001: A terminal device sends a request message to a second network device. Accordingly, the second network device receives the request message sent by the terminal device.

In an optional step, the request message requests the second network device to send time information.

It should be noted that, for related descriptions of the request message in S1001, refer to the related descriptions of S901. Details are not described herein again.

S1001a: The terminal device sends a MICO mode parameter to the second network device.

The MICO mode parameter includes MICO indication information, a value of a timer T3324, and a value of a timer T3512. The MICO indication information indicates whether the terminal device uses a MICO mode. The timer T3324 indicates duration within which the terminal device is reachable in a downlink before the terminal device enters the MICO mode (where time during which the timer T3324 runs may be active time). If the timer T3324 expires, the terminal device disables an access stratum (access stratum, AS) and activates the MICO mode. The timer T3512 is a periodic registration timer. When the terminal device enters an idle state or an inactive state, periodic registration may be initiated based on a cycle of the timer.

It should be noted that S1001 may be performed before S1001a, S1001 may be performed after S1001a, or S1001 and S1001a may be performed simultaneously. A sequence of S1001 and S1001a is not limited in this embodiment of this application.

Optionally, if S1001 and S1001a are performed simultaneously, the MICO mode parameter may be carried in the request message.

S1002: The second network device sends first indication information to the terminal device. Accordingly, the terminal device receives the first indication information from the second network device.

The first indication information indicates the terminal device to receive a first signal or a second signal based on the time information.

Optionally, the first indication information indicates the terminal device to determine the time information by using the mobile initiated connection only MICO mode parameter. A first time period is time corresponding to the MICO mode, and a second time period is the active time (active time).

Further, the active time may be the time during which the timer T3324 runs.

Further, a specific indication manner of the first indication information may be explicit indication or implicit indication. The following provides descriptions with reference to Manner g1 and Manner g2.

Manner g1: The first indication information is indicated explicitly.

It may be understood that, if the explicit indication is used, the second network device may perform indication based on an explicit bit (or field). Accordingly, the terminal device may determine corresponding information based on the explicit bit (or field).

For example, the first indication information occupies one bit. If a value of the bit is " 1", the first indication information indicates the terminal device to determine the time information by using the MICO mode parameter; or if a value of the bit is "0", the bit may be a protocol reserved bit, or indicate the terminal device not to determine the time information by using the MICO mode parameter.

For another example, the first indication information is indicated by one field. If the second network device sends the field, the first indication information indicates the terminal device to determine the time information by using the MICO mode parameter; or if the second network device does not send the field, the first indication information indicates the terminal device not to determine the time information by using the MICO mode parameter.

Manner g2: The first indication information is indicated implicitly.

It may be understood that, if the implicit indication is used, the second network device may perform implicit indication based on an existing bit (or field) or other information, and does not need to perform indication by using a separate bit (or field).

For example, if the second network device sends the MICO mode parameter and capability information to the terminal device, it implies that the second network device sends the first indication information to the terminal device. In other words, the MICO mode parameter and the capability information implicitly carry the first indication information. Accordingly, if the terminal device receives the MICO mode parameter and the capability information, the terminal device may learn that the second network device indicates the terminal device to determine the time information by using the MICO mode parameter.

Optionally, the first indication information is carried in a non-access stratum (non-access stratum, NAS) message.

Further, the NAS message may be a registration response message.

S1003: The second network device sends second indication information to a first network device. Accordingly, the first network device receives the second indication information from the second network device.

The second indication information indicates the first network device to receive the first signal or the second signal based on the time information.

Optionally, the second indication information indicates the first network device to determine the time information by using the mobile initiated connection only MICO mode parameter. The first time period is the time corresponding to the MICO mode, and the second time period is the active time (active time).

Further, the active time may be the time during which the timer T3324 runs.

Further, a specific indication manner of the second indication information may be explicit indication or implicit indication. The following provides descriptions with reference to Manner h1 and Manner h2.

Manner h1: The second indication information is indicated explicitly.

It may be understood that, if the explicit indication is used, the second network device may perform indication based on an explicit bit (or field). Accordingly, the first network device may determine corresponding information based on the explicit bit (or field).

For example, the second indication information occupies one bit. If a value of the bit is "1", the second indication information indicates the first network device to determine the time information by using the MICO mode parameter; or if a value of the bit is "0", the bit may be a protocol reserved bit, or indicate the first network device not to determine the time information by using the MICO mode parameter.

For another example, the second indication information is indicated by one field. If the second network device sends the field, the second indication information indicates the first network device to determine the time information by using the MICO mode parameter; or if the second network device does not send the field, the second indication information indicates the first network device not to determine the time information by using the MICO mode parameter.

Manner h2: The first indication information is indicated implicitly.

It may be understood that, if the implicit indication is used, the second network device may perform implicit indication based on an existing bit (or field) or other information, and does not need to perform indication by using a separate bit (or field).

For example, if the second network device sends the MICO mode parameter and the capability information to the first network device, it implies that the second network device sends the first indication information to the first network device. In other words, the MICO mode parameter and the capability information implicitly carry the first indication information. Accordingly, if the first network device receives the MICO mode parameter and the capability information, the first network device may learn that the second network device indicates the first network device to determine the time information by using the MICO mode parameter.

Optionally, the second indication information is carried in a paging message sent by the second network device to the first network device.

It should be noted that S1002 may be performed before S1003, S1002 may be performed after S1003, or S1002 and S1003 may be performed simultaneously. A sequence of S1002 and S1003 is not limited in this embodiment of this application.

S1004: The first network device sends the first signal to the terminal device in the first time period. Accordingly, the terminal device receives the first signal from the first network device, where the first signal is for paging or waking up the terminal device.

It should be noted that, for related descriptions of that the first network device sends the first signal to the terminal device in the first time period in S1004, refer to the related descriptions of S602. Details are not described herein again.

It should be noted that, for related descriptions of that the terminal device receives the first signal from the first network device in the first time period in S1004, refer to the related descriptions of S502. Details are not described herein again.

S1005: The first network device sends the second signal to the terminal device in the second time period. Accordingly, the terminal device receives the second signal from the first network device, where the second signal is for paging the terminal device, or indicates to the terminal device whether to receive paging.

It should be noted that, for related descriptions of that the first network device sends the second signal to the terminal device in the second time period in S1005, refer to the related descriptions of S603. Details are not described herein again.

It should be noted that, for related descriptions of that the terminal device receives the second signal from the first network device in the second time period in S1005, refer to the related descriptions of S503. Details are not described herein again.

Therefore, according to this embodiment of this application, the two time periods are bound to the MICO mode parameter, and the second network device separately explicitly or implicitly indicates the terminal device and the first network device to determine the first time period and the second time period by using the MICO mode parameter. The signal formats used by the terminal device to receive the downlink signals from the first network device in the two time periods are specified. This helps improve reliability of receiving the downlink signals by the terminal device, thereby improving communication performance. In addition, signaling overheads of additionally configuring the first time period and the second time period can be reduced.

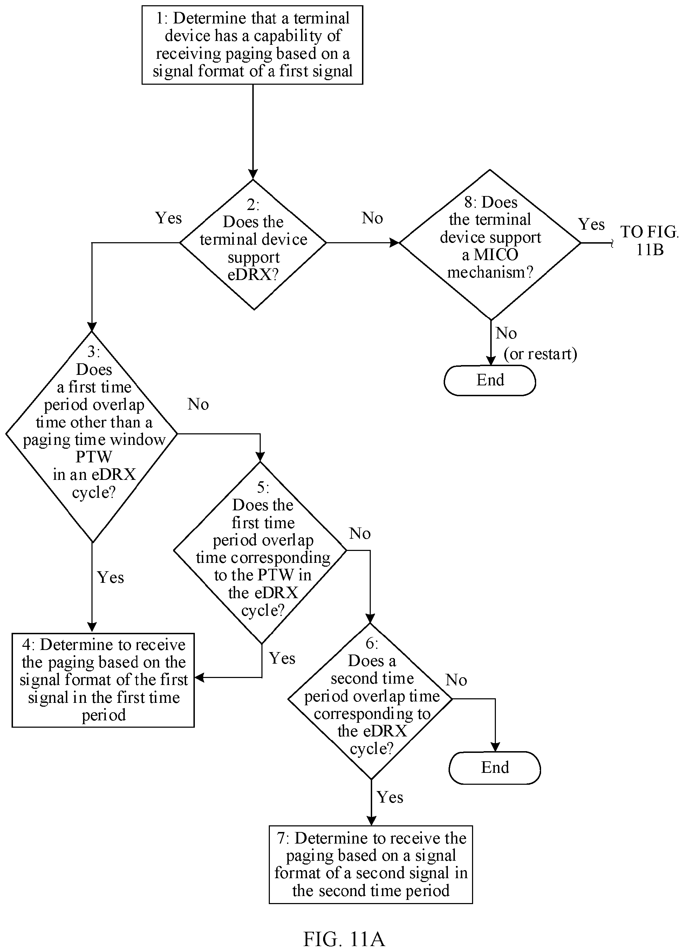

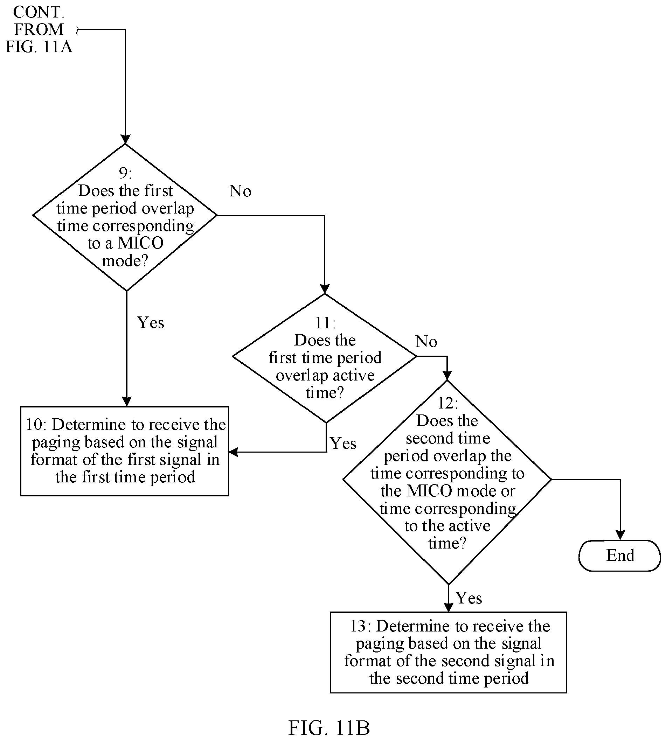

FIG. 11A and FIG. 11B are a schematic diagram of an embodiment of a communication method according to embodiments of this application. The following steps are included.

Step 1: Determine that a terminal device has a capability of receiving paging based on a signal format of a first signal.

Step 2: Determine whether the terminal device supports eDRX; and if yes, perform step 3; or if no, perform step 8.

Step 3: Determine whether a first time period overlaps time other than a paging time window PTW in an eDRX cycle; and if yes, perform step 4; or if no, perform step 5.

Step 4: Determine to receive the paging based on the signal format of the first signal in the first time period.

Step 5: Determine whether the first time period overlaps time corresponding to the PTW in the eDRX cycle; and if yes, perform step 4; or if no, perform step 6.

Step 6: Determine whether a second time period overlaps time corresponding to the eDRX cycle; and if yes, perform step 7; or if no, end the procedure.

Step 7: Determine to receive the paging based on a signal format of a second signal in the second time period.

Step 8: Determine whether the terminal device supports a MICO mechanism; and if yes, perform step 9; or if no, end the procedure.

Step 9: Determine whether the first time period overlaps time corresponding to a MICO mode; and if yes, perform step 10; or if no, perform step 11.

Step 10: Determine to receive the paging based on the signal format of the first signal in the first time period.

Step 11: Determine whether the first time period overlaps active time; and if yes, perform step 10; or if no, perform step 12.

Step 12: Determine whether the second time period overlaps the time corresponding to the MICO mode or time corresponding to the active time; and if yes, perform step 13; or if no, end the procedure.

Step 13: Determine to receive the paging based on the signal format of the second signal in the second time period.

It should be noted that the foregoing method may be applied to the terminal device, a first network device, and a second network device. In other words, once the foregoing time period overlapping occurs, the terminal device, the first network device, and the second network device use a same method (which is also referred to as a same rule) to determine a signal format used to receive the paging in the first time period or the second time period, to ensure consistent understandings of the terminal device, the first network device, and the second network device. This helps improve paging reliability, thereby improving communication performance.

Therefore, according to this embodiment of this application, if the configured first time period overlaps a time period corresponding to an eDRX mechanism, or the first time period overlaps a time period corresponding to the MICO mechanism, whether the terminal device receives a downlink signal from the first network device based on the format of the first signal or the format of the second signal in an overlapping time period is specified. In this way, behavior of the terminal device is standardized, to specify the signal format for receiving the downlink signal from the first network device in the overlapping time period. This avoids unclear behavior of the terminal device when the signal format for receiving the downlink signal is determined.

It should be noted that, (1) the embodiments corresponding to FIG. 5 to FIG. 7 may be separately implemented, or may be combined with each other; and the embodiments corresponding to FIG. 8 to FIG. 10 may be separately implemented, may be combined with each other, or may be combined with the embodiment corresponding to FIG. 11A and FIG. 11B. Alternatively, different solutions in different embodiments may be combined (where for example, all or some solutions in FIG. 8 may be combined with the embodiment corresponding to FIG. 11A and FIG. 11B). This is not specifically limited.

(2) Step numbers in the flowcharts (for example, FIG. 8, FIG. 9, and FIG. 10) described in embodiments of this application are merely examples of execution procedures, and do not constitute a limitation on an execution sequence of the steps. In embodiments of this application, there is no strict execution sequence between steps that do not have a time sequence dependency relationship with each other.

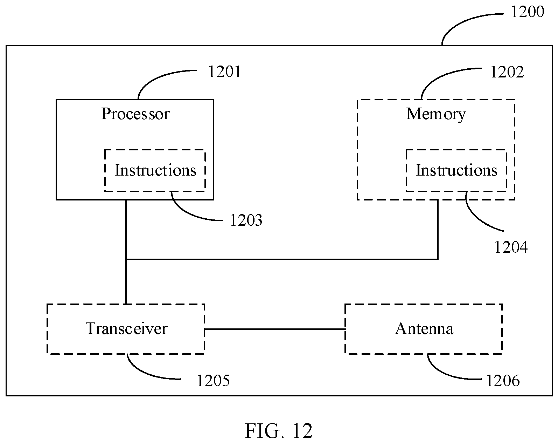

FIG. 12 is a schematic diagram of a structure of a communication apparatus according to an embodiment of this application. The communication apparatus 1200 includes one or more processors 1201. The processor 1201 may also be referred to as a processing unit, and may implement a specific control function. The processor 1201 may be a general-purpose processor, a dedicated processor, or the like. For example, the processor 1201 includes a baseband processor, a central processing unit, an application processor, a modem processor, a graphics processing unit, an image signal processor, a digital signal processor, a video codec processor, a controller, a memory, and/or a neural-network processing unit. The baseband processor may be configured to process a communication protocol and communication data. The central processing unit may be configured to control the communication apparatus 1200, and execute a software program and/or process data. Different processors may be independent components, or may be integrated into one or more processors, for example, integrated into one or more application-specific integrated circuits.

Optionally, the communication apparatus 1200 includes one or more memories 1202, configured to store instructions 1204. The instructions may be run on the processor, so that the terminal device 1200 performs the methods described in the foregoing method embodiments. Optionally, the memory 1202 may further store data. The processor and the memory may be separately disposed, or may be integrated together.

Optionally, the communication apparatus 1200 may include instructions 1203 (which may also be referred to as code or a program sometimes). The instructions 1203 may be run on the processor, so that the communication apparatus 1200 performs the methods described in the foregoing embodiments. The processor 1201 may store data.

Optionally, the communication apparatus 1200 may further include a transceiver 1205 and an antenna 1206. The transceiver 1205 may be referred to as a transceiver unit, a transceiver, a transceiver circuit, an input/output interface, or the like, and is configured to implement a transceiver function of the communication apparatus 1200 through the antenna 1206.

Optionally, the communication apparatus 1200 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the LTE 1200 may include more or fewer components, some components may be integrated, or some components may be split. These components may be hardware, software, or a combination implementation of the software and the hardware.

The processor 1201 and the transceiver 1205 described in this application may be implemented in an integrated circuit (integrated circuit, IC), an analog IC, a radio-frequency integrated circuit (radio frequency identification, RFID), a mixed-signal IC, an application specific integrated circuit (application specific integrated circuit, ASIC), a printed circuit board (printed circuit board, PCB), an electronic device, or the like. The communication apparatus that implements the descriptions in this specification may be an independent device (for example, an independent integrated circuit and a mobile phone), or may be a part of a large device (for example, a module that may be embedded in another device). For details, refer to the foregoing descriptions of the terminal device and the network device. Details are not described herein again.

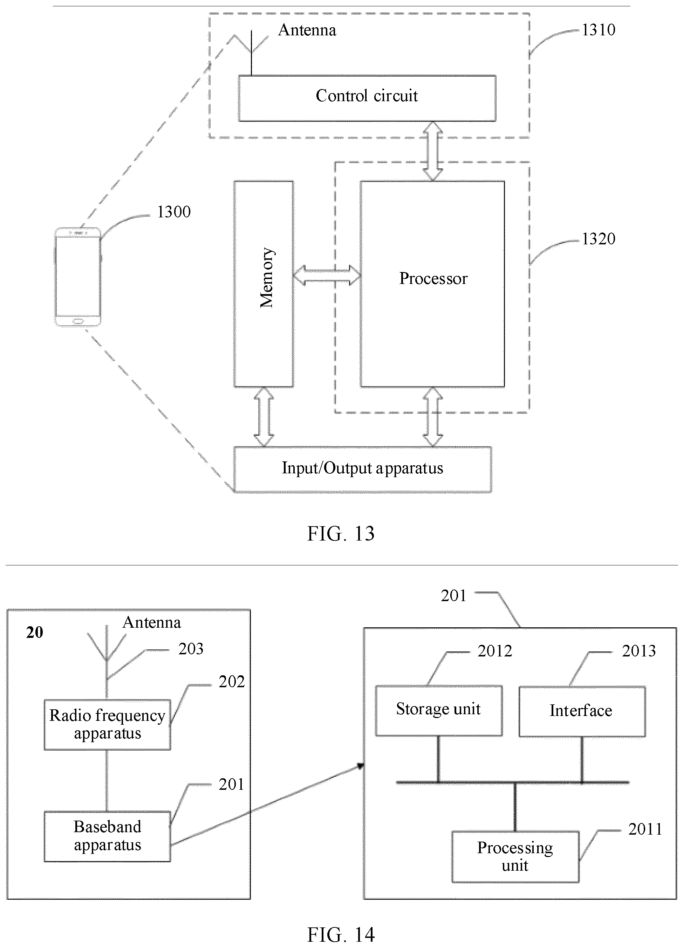

FIG. 13 is a schematic diagram of a structure of a terminal device according to an embodiment of this application.

As shown in FIG. 13, the terminal device 1300 includes a processor, a memory, a control circuit, an antenna, and an input/output apparatus. The processor is mainly configured to: process a communication protocol and communication data, control the entire terminal device 1300, execute a software program, and process data of the software program. The memory is mainly configured to store the software program and the data. The control circuit is mainly configured to convert a baseband signal and a radio frequency signal and process the radio frequency signal. The antenna is mainly configured to send and receive a radio frequency signal in a form of an electromagnetic wave. The input/output apparatus, for example, a touchscreen, a display, a microphone, or a keyboard, is mainly configured to receive data input by a user, and output data to the user.

For example, the terminal device 1300 is a mobile phone. After the terminal device 1300 is powered on, the processor may read a software program in a storage unit, explain and execute instructions of the software program, and process data of the software program. When data needs to be wirelessly sent, the processor outputs a baseband signal to the control circuit after performing baseband processing on to-be-sent data. After performing radio frequency processing on the baseband signal, the control circuit sends a radio frequency signal in a form of an electromagnetic wave through the antenna. When data is sent to the terminal device 1300, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 13 shows only one memory and one processor. In some embodiments, the terminal device 1300 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device 1300, execute the software program, and process the data of the software program. The processor in FIG. 13 integrates functions of the baseband processor and the central processing unit. A person skilled in the art may understand that the baseband processor and the central processing unit may alternatively be independent processors, and are interconnected by using a technology such as a bus. In addition, the terminal device 1300 may include a plurality of baseband processors to adapt to different network standards, and the terminal device 1300 may include a plurality of central processing units to enhance a processing capability of the terminal device 1300. Components of the terminal device 1300 may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1310 of the terminal device 1300, and the processor that has a processing function may be considered as a processing unit 1320 of the terminal device 1300. As shown in FIG. 13, the terminal device 1300 includes the transceiver unit 1310 and the processing unit 1320. The transceiver unit may also be referred to as a transceiver, a transceiver apparatus, or the like. Optionally, a component that is in the transceiver unit 1310 and that is configured to implement a receiving function may be considered as a receiving unit, and a component that is in the transceiver unit 1310 and that is configured to implement a sending function may be considered as a sending unit. In other words, the transceiver unit 1310 includes the receiving unit and the sending unit. For example, the receiving unit may also be referred to as a receiver or a receiving circuit, and the sending unit may also be referred to as a transmitter or a transmitting circuit.

FIG. 14 is a schematic diagram of a structure of a network device according to an embodiment of this application. As shown in FIG. 14, the network device 20 may serve as a first network device and have a function of the first network device relative to a LTE or some LTEs, or may serve as a second network device and have a function of the second network device relative to a UE or some UEs. The network device includes a baseband apparatus 201, a radio frequency apparatus 202, and an antenna 203. In an uplink direction, the radio frequency apparatus 202 receives, through the antenna 203, information sent by a terminal device, and sends, to the baseband apparatus 201 for processing, the information sent by the terminal device. In a downlink direction, the baseband apparatus 201 processes information about the terminal device, and sends the information to the radio frequency apparatus 202. The radio frequency apparatus 202 processes the information about the terminal device, and then sends processed information to the terminal device through the antenna 203.

The baseband apparatus 201 includes one or more processing units 2011, a storage unit 2012, and an interface 2013. The processing unit 2011 is configured to support the network device in performing a function of the network device in the foregoing method embodiments. The storage unit 2012 is configured to store a software program and/or data. The interface 2013 is configured to exchange information with the radio frequency apparatus 202. The interface includes an interface circuit, configured to input and output information. In an implementation, the processing unit is an integrated circuit, for example, one or more ASICs, one or more DSPs, one or more FPGAs, or a combination of these types of integrated circuits. The integrated circuits may be integrated together to form a chip. The storage unit 2012 and the processing unit 2011 may be located in a same chip, that is, an on-chip storage element. Alternatively, the storage unit 2012 and the processing unit 2011 may be located in a chip different from the processing element 2011, that is, an off-chip storage element. The storage unit 2012 may be one memory, or may be a collective name of a plurality of memories or storage elements.

The network device may implement some or all of the steps in the foregoing method embodiments in a form of scheduling programs by one or more processing units. For example, a corresponding function of the network device in FIG. 5 to FIG. 11B is implemented. The one or more processing units may support radio access technologies of a same standard, or may support radio access technologies of different standards.

A person of ordinary skill in the art may be aware that, in combination with the examples described in embodiments disclosed in this specification, units and steps can be implemented by electronic hardware or a combination of computer software and the electronic hardware. Whether the functions are performed by hardware or software depends on particular applications and design constraints of the technical solutions. A person skilled in the art may use different methods to implement the functions for each particular application, but it should not be considered that the implementation goes beyond the scope of this application. In addition, it should be understood that the methods and the steps in the examples described in embodiments disclosed in this specification may be implemented by using one or more functional units (which are also referred to as functional modules), and the one or more functional units (which are also referred to as the functional modules) may be located in a same apparatus or different apparatuses.

In the several embodiments provided in this application, it should be understood that the disclosed system, apparatus, and method may be implemented in other manners. For example, the foregoing apparatus embodiment is merely an example. For example, division into the units is merely logical function division. The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions in embodiments.

When the functions are implemented in the form of a software functional unit and sold or used as an independent product, the functions may be stored in a computer-readable storage medium. Based on such an understanding, the technical solutions in this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing computer-readable storage medium may be any available medium that can be accessed by a computer. By way of example but not limitation, the computer-readable medium may include a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, another magnetic storage device, or any other medium that can be for carrying or storing expected program code in a form of instructions or a data structure and that can be accessed by a computer. In addition, by way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method is applicable to a terminal device, and comprises:
obtaining time information, wherein the time information is for determining a first time period and a second time period;
receiving a first signal from a first network device in the first time period, wherein the first signal is for paging or waking up the terminal device; and
receiving a second signal from the first network device in the second time period, wherein the second signal is for paging the terminal device, or indicates to the terminal device whether to receive paging, wherein
a signal format of the first signal and a signal format of the second signal are different, and the signal format comprises at least one of the following: coding, modulation, and multiple access.

2. The method according to claim 1, wherein the receiving a first signal from a first network device in the first time period, wherein the first signal is for waking up the terminal device comprises:
receiving the first signal from the first network device in the first time period, wherein the first signal indicates the terminal device to receive the paging by using the format of the second signal.

3. The method according to claim 1 or 2, wherein in the first time period, the terminal device satisfies at least one of the following:
a random access process is not performed;
service data is not received and/or sent; and
a receiving circuit of the terminal device comprises a passive circuit or a semi-active circuit.

4. The method according to any one of claims 1 to 3, wherein the time information comprises first time period information and second time period information, the first time period information is for determining the first time period, and the second time period information is for determining the second time period, wherein
the first time period information comprises at least one of the following: a first cycle, a first start position, a first offset, or first duration; or
the first time period information comprises a first timer; and
the second time period information comprises at least one of the following: a second cycle, a second start position, a second offset, or second duration; or
the second time period information comprises a second timer.

5. The method according to any one of claims 1 to 3, wherein
the first time period is time other than a paging time window PTW in an extended discontinuous reception eDRX cycle, and the second time period is time corresponding to the PTW in the eDRX cycle; or
the first time period is time corresponding to a mobile initiated connection only MICO mode, and the second time period is active time (active time).

6. The method according to any one of claims 1 to 5, wherein the obtaining time information comprises:
receiving first indication information from a second network device, wherein the first indication information indicates the terminal device to receive the first signal or the second signal based on the time information; and
determining the time information based on the first indication information.

7. The method according to claim 6, wherein
the first indication information carries the time information;
the first indication information indicates the terminal device to determine the time information by using an extended discontinuous reception eDRX parameter; or
the first indication information indicates the terminal device to determine the time information by using a mobile initiated connection only MICO mode parameter.

8. The method according to any one of claims 1 to 7, wherein the method further comprises:
sending a request message to the second network device, wherein the request message requests the second network device to send the time information, or indicates time information requested by the terminal device.

9. The method according to claim 8, wherein the time information requested by the terminal device comprises requested time information and/or capability information, wherein
the requested time information comprises first time period information and second time period information that are expected by the terminal device, and the capability information indicates that the terminal device supports a capability of receiving the paging based on the signal format of the first signal, or indicates signal format information that is used when the paging is received and that is supported by the terminal device.

10. The method according to any one of claims 1 to 9, wherein the method further comprises at least one of the following:
if the first time period overlaps the time other than the paging time window PTW in the extended discontinuous reception eDRX cycle, determining to receive the paging based on the signal format of the first signal in the first time period;
if the first time period overlaps the time corresponding to the paging time window PTW in the extended discontinuous reception eDRX cycle, determining to receive the paging based on the signal format of the second signal in the first time period;
if the second time period overlaps time corresponding to the extended discontinuous reception eDRX cycle, determining to receive the paging based on the signal format of the second signal in the second time period;
if the first time period overlaps the time corresponding to the mobile initiated connection only MICO mode, determining to receive the paging based on the signal format of the first signal in the first time period;
if the first time period overlaps the active time, determining to receive the paging based on the signal format of the second signal in the first time period; or
if the second time period overlaps the time corresponding to the mobile initiated connection only MICO mode or time corresponding to the active time, determining to receive the paging based on the signal format of the second signal in the second time period.

11. A communication method, wherein the method is applicable to a first network device, and comprises:
obtaining time information, wherein the time information is for determining a first time period and a second time period;
sending a first signal in the first time period, wherein the first signal is for paging or waking up a terminal device; and
sending a second signal in the second time period, wherein the second signal is for paging the terminal device, or indicates to the terminal device whether to receive paging, wherein
a signal format of the first signal and a signal format of the second signal are different, and the signal format comprises at least one of the following: coding, modulation, and multiple access.

12. The method according to claim 11, wherein the sending a first signal in the first time period, wherein the first signal is for waking up a terminal device comprises:
sending the first signal to the terminal device in the first time period, wherein the first signal indicates the terminal device to receive the paging based on the format of the second signal.

13. The method according to claim 11 or 12, wherein in the first time period, the terminal device satisfies at least one of the following:
a random access process is not performed;
service data is not received and/or sent; and
a receiving circuit of the terminal device comprises a passive circuit or a semi-active circuit.

14. The method according to any one of claims 11 to 13, wherein the time information comprises first time period information and second time period information, the first time period information is for determining the first time period, and the second time period information is for determining the second time period, wherein
the first time period information comprises at least one of the following: a first cycle, a first start position, a first offset, or first duration; or
the first time period information comprises a first timer; and
the second time period information comprises at least one of the following: a second cycle, a second start position, a second offset, or second duration; or
the second time period information comprises a second timer.

15. The method according to any one of claims 11 to 13, wherein
the first time period is time other than a paging time window PTW in an extended discontinuous reception eDRX cycle, and the second time period is time corresponding to the PTW in the eDRX cycle; or
the first time period is time corresponding to a mobile initiated connection only MICO mode, and the second time period is active time (active time).

16. The method according to any one of claims 11 to 15, wherein the obtaining time information comprises:
receiving second indication information from a second network device, wherein the second indication information indicates the first network device to send the first signal or the second signal based on the time information; and
determining the time information based on the second indication information.

17. The method according to claim 16, wherein
the second indication information carries the time information;
the second indication information indicates the first network device to determine the time information by using an extended discontinuous reception eDRX parameter; or
the second indication information indicates the first network device to determine the time information by using a mobile initiated connection only MICO mode parameter.

18. The method according to any one of claims 11 to 17, wherein the method further comprises at least one of the following:
if the first time period overlaps the time other than the paging time window PTW in the extended discontinuous reception eDRX cycle, determining to send the paging based on the signal format of the first signal in the first time period;
if the first time period overlaps the time corresponding to the paging time window PTW in the extended discontinuous reception eDRX cycle, determining to send the paging based on the signal format of the second signal in the first time period;
if the second time period overlaps time corresponding to the extended discontinuous reception eDRX cycle, determining to send the paging based on the signal format of the second signal in the second time period;
if the first time period overlaps the time corresponding to the mobile initiated connection only MICO mode, determining to send the paging based on the signal format of the first signal in the first time period;
if the first time period overlaps the active time, determining to send the paging based on the signal format of the second signal in the first time period; or
if the second time period overlaps the time corresponding to the mobile initiated connection only MICO mode or time corresponding to the active time, determining to send the paging based on the signal format of the second signal in the second time period.

19. A communication method, wherein the method is applicable to a second network device, and comprises:
sending first indication information to a terminal device, wherein the first indication information indicates the terminal device to receive a first signal or a second signal based on time information; and
sending second indication information to a first network device, wherein the second indication information indicates the first network device to send the first signal or the second signal based on the time information, wherein
the time information is for determining a first time period and a second time period;
a signal format of the first signal received by the terminal device in the first time period and a signal format of the second signal received by the terminal device in the second time period are different, and the signal format comprises at least one of the following: coding, modulation, and multiple access; and
the first signal is for paging or waking up the terminal device, and the second signal is for paging the terminal device, or indicates to the terminal device whether to receive paging.

20. The method according to claim 19, wherein in the first time period, the terminal device satisfies at least one of the following:
a random access process is not performed;
service data is not received and/or sent; and
a receiving circuit of the terminal device comprises a passive circuit or a semi-active circuit.

21. The method according to claim 19 or 20, wherein the time information comprises first time period information and second time period information, the first time period information is for determining the first time period, and the second time period information is for determining the second time period, wherein
the first time period information comprises at least one of the following: a first cycle, a first start position, a first offset, or first duration; or
the first time period information comprises a first timer; and
the second time period information comprises at least one of the following: a second cycle, a second start position, a second offset, or second duration; or
the second time period information comprises a second timer.

22. The method according to any one of claims 19 to 21, wherein
the first time period is time other than a paging time window PTW in an extended discontinuous reception eDRX cycle, and the second time period is time corresponding to the PTW in the eDRX cycle; or
the first time period is time corresponding to a mobile initiated connection only MICO mode, and the second time period is active time (active time).

23. The method according to claim 19, wherein
the first indication information carries the time information;
the first indication information indicates the terminal device to determine the time information by using an extended discontinuous reception eDRX cycle; or
the first indication information indicates the terminal device to determine the time information by using time corresponding to a mobile initiated connection only MICO mode.

24. The method according to claim 19, wherein
the second indication information carries the time information;
the second indication information indicates the first network device to determine the time information by using an extended discontinuous reception eDRX parameter; or
the first indication information indicates the first network device to determine the time information by using a mobile initiated connection only MICO mode parameter.

25. The method according to any one of claims 19 to 24, wherein the method further comprises:
receiving a request message from the terminal device, wherein the request message requests the second network device to send the time information, or indicates time information requested by the terminal device.

26. The method according to claim 25, wherein the time information requested by the terminal device comprises requested time information and/or capability information, wherein
the requested time information comprises first time period information and second time period information that are expected by the terminal device, and the capability information indicates that the terminal device supports a capability of receiving the paging based on the signal format of the first signal, or indicates signal format information that is used when the paging is received and that is supported by the terminal device.

27. A communication apparatus, comprising:
a processing unit, configured to obtain time information, wherein the time information is for determining a first time period and a second time period; and
a transceiver unit, configured to receive a first signal from a first network device in the first time period, wherein the first signal is for paging or waking up the terminal device, wherein
the transceiver unit is further configured to receive a second signal from the first network device in the second time period, wherein the second signal is for paging the terminal device, or indicates to the terminal device whether to receive paging, wherein
a signal format of the first signal and a signal format of the second signal are different, and the signal format comprises at least one of the following: coding, modulation, and multiple access.

28. The apparatus according to claim 27, wherein the transceiver unit is specifically configured to receive the first signal from the first network device in the first time period, wherein the first signal indicates the terminal device to receive the paging by using the format of the second signal.

29. The apparatus according to claim 27 or 28, wherein in the first time period, the terminal device satisfies at least one of the following:
a random access process is not performed;
service data is not received and/or sent; and
a receiving circuit of the terminal device comprises a passive circuit or a semi-active circuit.

30. The apparatus according to any one of claims 27 to 29, wherein the time information comprises first time period information and second time period information, the first time period information is for determining the first time period, and the second time period information is for determining the second time period, wherein
the first time period information comprises at least one of the following: a first cycle, a first start position, a first offset, or first duration; or
the first time period information comprises a first timer; and
the second time period information comprises at least one of the following: a second cycle, a second start position, a second offset, or second duration; or
the second time period information comprises a second timer.

31. The apparatus according to any one of claims 27 to 30, wherein the first time period is time other than a paging time window PTW in an extended discontinuous reception eDRX cycle, and the second time period is time corresponding to the PTW in the eDRX cycle; or
the first time period is time corresponding to a mobile initiated connection only MICO mode, and the second time period is active time (active time).

32. The apparatus according to any one of claims 27 to 31, wherein
the transceiver unit is specifically configured to receive first indication information from a second network device, wherein the first indication information indicates the terminal device to receive the first signal or the second signal based on the time information; and
the processing unit is specifically configured to determine the time information based on the first indication information.

33. The apparatus according to claim 32, wherein
the first indication information carries the time information;
the first indication information indicates the terminal device to determine the time information by using an extended discontinuous reception eDRX parameter; or
the first indication information indicates the terminal device to determine the time information by using a mobile initiated connection only MICO mode parameter.

34. The apparatus according to any one of claims 27 to 33, wherein
the transceiver unit is further configured to send a request message to the second network device, wherein the request message requests the second network device to send the time information, or indicates time information requested by the terminal device.

35. The apparatus according to claim 34, wherein the time information requested by the terminal device comprises requested time information and/or capability information, wherein
the requested time information comprises first time period information and second time period information that are expected by the terminal device, and the capability information indicates that the terminal device supports a capability of receiving the paging based on the signal format of the first signal, or indicates signal format information that is used when the paging is received and that is supported by the terminal device.

36. The apparatus according to any one of claims 27 to 35, wherein the processing unit is further configured to perform at least one of the following:
if the first time period overlaps the time other than the paging time window PTW in the extended discontinuous reception eDRX cycle, determining to receive the paging based on the signal format of the first signal in the first time period;
if the first time period overlaps the time corresponding to the paging time window PTW in the extended discontinuous reception eDRX cycle, determining to receive the paging based on the signal format of the second signal in the first time period;
if the second time period overlaps time corresponding to the extended discontinuous reception eDRX cycle, determining to receive the paging based on the signal format of the second signal in the second time period;
if the first time period overlaps the time corresponding to the mobile initiated connection only MICO mode, determining to receive the paging based on the signal format of the first signal in the first time period;
if the first time period overlaps the active time, determining to receive the paging based on the signal format of the second signal in the first time period; or
if the second time period overlaps the time corresponding to the mobile initiated connection only MICO mode or time corresponding to the active time, determining to receive the paging based on the signal format of the second signal in the second time period.

37. A communication apparatus, comprising:
a processing unit, configured to obtain time information, wherein the time information is for determining a first time period and a second time period; and
a transceiver unit, configured to send a first signal in the first time period, wherein the first signal is for paging or waking up a terminal device, wherein
the transceiver unit is further configured to send a second signal in the second time period, wherein the second signal is for paging the terminal device, or indicates to the terminal device whether to receive paging, wherein
a signal format of the first signal and a signal format of the second signal are different, and the signal format comprises at least one of the following: coding, modulation, and multiple access.

38. The apparatus according to claim 37, wherein the transceiver unit is specifically configured to send the first signal to the terminal device in the first time period, wherein the first signal indicates the terminal device to receive the paging based on the format of the second signal.

39. The apparatus according to claim 37 or 38, wherein in the first time period, the terminal device satisfies at least one of the following:
a random access process is not performed;
service data is not received and/or sent; and
a receiving circuit of the terminal device comprises a passive circuit or a semi-active circuit.

40. The apparatus according to any one of claims 37 to 39, wherein the time information comprises first time period information and second time period information, the first time period information is for determining the first time period, and the second time period information is for determining the second time period, wherein
the first time period information comprises at least one of the following: a first cycle, a first start position, a first offset, or first duration; or
the first time period information comprises a first timer; and
the second time period information comprises at least one of the following: a second cycle, a second start position, a second offset, or second duration; or
the second time period information comprises a second timer.

41. The apparatus according to any one of claims 37 to 39, wherein the first time period is time other than a paging time window PTW in an extended discontinuous reception eDRX cycle, and the second time period is time corresponding to the PTW in the eDRX cycle; or
the first time period is time corresponding to a mobile initiated connection only MICO mode, and the second time period is active time (active time).

42. The apparatus according to any one of claims 37 to 41, wherein
the transceiver unit is specifically configured to receive second indication information from a second network device, wherein the second indication information indicates the first network device to send the first signal or the second signal based on the time information; and
the processing unit is specifically configured to determine the time information based on the second indication information.

43. The apparatus according to claim 42, wherein the second indication information carries the time information;
the second indication information indicates the first network device to determine the time information by using an extended discontinuous reception eDRX parameter; or
the second indication information indicates the first network device to determine the time information by using a mobile initiated connection only MICO mode parameter.

44. The apparatus according to any one of claims 37 to 43, wherein the processing unit is further configured to perform at least one of the following:
if the first time period overlaps the time other than the paging time window PTW in the extended discontinuous reception eDRX cycle, determining to send the paging based on the signal format of the first signal in the first time period;
if the first time period overlaps the time corresponding to the paging time window PTW in the extended discontinuous reception eDRX cycle, determining to send the paging based on the signal format of the second signal in the first time period;
if the second time period overlaps time corresponding to the extended discontinuous reception eDRX cycle, determining to send the paging based on the signal format of the second signal in the second time period;
if the first time period overlaps the time corresponding to the mobile initiated connection only MICO mode, determining to send the paging based on the signal format of the first signal in the first time period;
if the first time period overlaps the active time, determining to receive the paging based on the signal format of the second signal in the first time period; or
if the second time period overlaps the time corresponding to the mobile initiated connection only MICO mode or time corresponding to the active time, determining to receive the paging based on the signal format of the second signal in the second time period.

45. A communication apparatus, comprising:
a transceiver unit, configured to send first indication information to a terminal device, wherein the first indication information indicates the terminal device to receive a first signal or a second signal based on time information, wherein
the transceiver unit is further configured to send second indication information to a first network device, wherein the second indication information indicates the first network device to send the first signal or the second signal based on the time information, wherein
the time information is for determining a first time period and a second time period;
a signal format of the first signal received by the terminal device in the first time period and a signal format of the second signal received by the terminal device in the second time period are different, and the signal format comprises at least one of the following: coding, modulation, and multiple access; and
the first signal is for paging or waking up the terminal device, and the second signal is for paging the terminal device, or indicates to the terminal device whether to receive paging.

46. The apparatus according to claim 45, wherein in the first time period, the terminal device satisfies at least one of the following:
a random access process is not performed;
service data is not received and/or sent; and
a receiving circuit of the terminal device comprises a passive circuit or a semi-active circuit.

47. The apparatus according to claim 45 or 46, wherein the time information comprises first time period information and second time period information, the first time period information is for determining the first time period, and the second time period information is for determining the second time period, wherein
the first time period information comprises at least one of the following: a first cycle, a first start position, a first offset, or first duration; or
the first time period information comprises a first timer; and
the second time period information comprises at least one of the following: a second cycle, a second start position, a second offset, or second duration; or
the second time period information comprises a second timer.

48. The apparatus according to any one of claims 45 to 47, wherein the first time period is time other than a paging time window PTW in an extended discontinuous reception eDRX cycle, and the second time period is time corresponding to the PTW in the eDRX cycle; or
the first time period is time corresponding to a mobile initiated connection only MICO mode, and the second time period is active time (active time).

49. The apparatus according to claim 45, wherein
the first indication information carries the time information;
the first indication information indicates the terminal device to determine the time information by using an extended discontinuous reception eDRX cycle; or
the first indication information indicates the terminal device to determine the time information by using time corresponding to a mobile initiated connection only MICO mode.

50. The apparatus according to claim 45, wherein
the second indication information carries the time information;
the second indication information indicates the first network device to determine the time information by using an extended discontinuous reception eDRX parameter; or
the first indication information indicates the first network device to determine the time information by using a mobile initiated connection only MICO mode parameter.

51. The apparatus according to any one of claims 45 to 50, wherein the transceiver unit is further configured to receive a request message from the terminal device, wherein the request message requests the second network device to send the time information, or indicates time information requested by the terminal device.

52. The apparatus according to claim 51, wherein the time information requested by the terminal device comprises requested time information and/or capability information, wherein
the requested time information comprises first time period information and second time period information that are expected by the terminal device, and the capability information indicates that the terminal device supports a capability of receiving the paging based on the signal format of the first signal, or indicates signal format information that is used when the paging is received and that is supported by the terminal device.

53. A communication apparatus, comprising at least one processor and a memory, wherein the memory stores instructions; and when the instructions are run on a computer, the computer is enabled to perform the method according to any one of claims 1 to 10.

54. A communication apparatus, comprising at least one processor and a memory, wherein the memory stores instructions; and when the instructions are run on a computer, the computer is enabled to perform the method according to any one of claims 11 to 18.

55. A communication apparatus, comprising at least one processor and a memory, wherein the memory stores instructions; and when the instructions are run on a computer, the computer is enabled to perform the method according to any one of claims 19 to 26.

56. A computer-readable storage medium, configured to store instructions, wherein when the instructions are run on a computer, the computer is enabled to perform the method according to any one of claims 1 to 10.

57. A computer-readable storage medium, configured to store instructions, wherein when the instructions are run on a computer, the computer is enabled to perform the method according to any one of claims 11 to 18.

58. A computer-readable storage medium, configured to store instructions, wherein when the instructions are run on a computer, the computer is enabled to perform the method according to any one of claims 19 to 26.
